(19) Europäisches Patentamt
European Patent Office
Office européen des brevets

(11) **EP 4 734 353 A1**

(12) **EUROPEAN PATENT APPLICATION**
published in accordance with Art. 153(4) EPC

(43) Date of publication:
29.04.2026 Bulletin 2026/18

(51) International Patent Classification (IPC):
*H02P 6/08* (2016.01)

(21) Application number: 23941828.8

(22) Date of filing: 22.06.2023

(52) Cooperative Patent Classification (CPC):
B62D 6/008; B62D 5/0463; B62D 15/025;
H02P 6/08

(86) International application number:
PCT/JP2023/023082

(87) International publication number:
WO 2024/261947 (26.12.2024 Gazette 2024/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: JTEKT CORPORATION
Kariya-shi, Aichi 448-8652 (JP)

(72) Inventors:
• EDAMOTO, Syouma
  Kariya-shi, Aichi 448-8652 (JP)
• TAMURA, Tsutomu
  Kariya-shi, Aichi 448-8652 (JP)
• FUCHS, Robert
  Kariya-shi, Aichi 448-8652 (JP)

(74) Representative: Winter, Brandl - Partnerschaft mbB
Alois-Steinecker-Straße 22
85354 Freising (DE)

(54) **MOTOR CONTROL DEVICE**

(57) A motor control device includes: a manual steering command value calculation unit that calculates a manual steering command value using torsion bar torque; an integrated angle command value calculation unit that calculates an integrated angle command value by adding the manual steering command value to an automatic steering command value for driving assistance; and a control unit that controls drive of an electric motor based on the integrated angle command value. The manual steering command value calculation unit is configured to, in a driving assistance mode, calculate the manual steering command value using an equation of motion of a reference model of the steering device. The manual steering command value calculation unit calculates the manual steering command value using, as a virtual damper reaction force in the equation of motion, a virtual damper reaction force obtained by adding a virtual damper reaction force according to a derivative of the automatic steering command value to a virtual damper reaction force according to a derivative of the manual steering command value.

FIG. 5

**Description**

TECHNICAL FIELD

The present disclosure relates to a control device for an electric motor for steering angle control.

BACKGROUND ART

Patent Document 1 discloses a motor control device including: an assist torque command value setting unit that generates an assist torque command value using torsion bar torque; a manual steering command value generation unit that generates a manual steering command value using the torsion bar torque and the assist torque command value; an integrated angle command value calculation unit that calculates an integrated angle command value by adding the manual steering command value to an automatic steering command value; and a switching unit that switches, based on a switching signal, first control for controlling an electric motor based only on the assist torque command value and second control for controlling the electric motor based on the integrated angle command value.

Related Art Documents

Patent Documents

Patent Document 1: WO 2023/286169

SUMMARY OF THE INVENTION

Problem to be Solved by the Invention

In the second control described in Patent Document 1, the manual steering command value generation unit generates the manual steering command value using an equation of motion of a reference model of a steering device. The equation of motion of the reference model of the steering device includes a moment of inertia, a virtual spring reaction force, and a virtual damper reaction force (virtual damper reaction force according to the manual steering command value).
The virtual damper reaction force according to the manual steering command value includes an automatic steering component according to a first derivative of the automatic steering command value. The absolute value of the first derivative of the automatic steering command value increases, for example, when the yaw angle with respect to a lane increases or the vehicle speed increases. In such a case, the absolute value of the automatic steering component of the virtual damper reaction force increases. The automatic steering component included in the virtual damper reaction force is not related to the driver's behavior. Therefore, when the absolute value of the automatic steering component of the virtual damper reaction force increases, the driver may feel discomfort.
An object of the present disclosure is to provide a motor control device that can reduce discomfort felt by a driver due to an automatic steering component included in a virtual damper reaction force according to a manual steering command value.

Means for Solving the Problem

One embodiment of the present disclosure provides a motor control device that controls drive of an electric motor of a steering device. The motor control device includes: a manual steering command value calculation unit that calculates a manual steering command value using torsion bar torque; an integrated angle command value calculation unit that calculates an integrated angle command value by adding the manual steering command value to an automatic steering command value for driving assistance; and a control unit that controls the drive of the electric motor based on the integrated angle command value. The manual steering command value calculation unit is configured to, in a driving assistance mode, calculate the manual steering command value using an equation of motion of a reference model of the steering device. The manual steering command value calculation unit calculates the manual steering command value using, as a virtual damper reaction force in the equation of motion, a virtual damper reaction force obtained by adding a virtual damper reaction force according to a derivative of the automatic steering command value to a virtual damper reaction force according to a derivative of the manual steering command value.
With this configuration, it is possible to reduce the discomfort felt by the driver due to the automatic steering component included in the virtual damper reaction force according to the manual steering command value.
The above and other objects, features, and effects of the present disclosure will become apparent from the following description of an embodiment that will be given with reference to the accompanying drawings.

BRIEF DESCRIPTION OF THE DRAWINGS

[FIG. 1] FIG. 1 is a schematic diagram showing a schematic configuration of an electric power steering system to which a motor control device according to an embodiment of the present disclosure is applied.

[FIG. 2] FIG. 2 is a block diagram illustrating an electrical configuration of a motor control ECU.

[FIG. 3] FIG. 3 is a graph showing an example of setting an assist torque command value $T_{as}$ with respect to torsion bar torque $T_{tb}$.

[FIG. 4] FIG. 4 is a schematic diagram showing an example of a reference EPS model.

[FIG. 5] FIG. 5 is a block diagram showing the configuration of a manual steering command value calculation unit.

[FIG. 6] FIG. 6 is a block diagram showing the configuration of an angle control unit.

[FIG. 7] FIG. 7 is a schematic diagram showing an example of the configuration of a physical model of the electric power steering system.

[FIG. 8] FIG. 8 is a block diagram showing the configuration of a disturbance torque estimation unit.

[FIG. 9] FIG. 9 is a schematic diagram showing the configuration of a torque control unit.

[FIG. 10] FIG. 10 is a block diagram showing a first modification of the motor control ECU.

[FIG. 11] FIG. 11 is a graph showing an example of setting a target virtual spring reaction force $T_{tb,d}(e_l)$ with respect to a lateral deviation $e_l$.

[FIG. 12] FIG. 12 is a block diagram showing the configuration of a manual steering command value calculation unit that is used in the first modification of the motor control ECU.

[FIG. 13] FIG. 13 is a block diagram showing a second modification and a third modification of the motor control ECU.

[FIG. 14] FIG. 14 is a graph showing an example of setting that is performed by an LCA target virtual spring reaction force/weight setting unit for the lateral deviation $e_l$.

[FIG. 15] FIG. 15 is a block diagram showing the configuration of a manual steering command value calculation unit that is used in the second modification of the motor control ECU.

[FIG. 16] FIG. 16 is a block diagram showing the configuration of a manual steering command value calculation unit that is used in the third modification of the motor control ECU.

MODES FOR CARRYING OUT THE INVENTION

[Description of Embodiment of Disclosure]

One embodiment of the present disclosure provides a motor control device that controls drive of an electric motor of a steering device for steering angle control. The motor control device includes: a manual steering command value calculation unit that calculates a manual steering command value using torsion bar torque; an integrated angle command value calculation unit that calculates an integrated angle command value by adding the manual steering command value to an automatic steering command value for driving assistance; and a control unit that controls the drive of the electric motor based on the integrated angle command value. The manual steering command value calculation unit is configured to, in a driving assistance mode, calculate the manual steering command value using an equation of motion of a reference model of the steering device. The manual steering command value calculation unit calculates the manual steering command value using, as a virtual damper reaction force in the equation of motion, a virtual damper reaction force obtained by adding a virtual damper reaction force according to a derivative of the automatic steering command value to a virtual damper reaction force according to a derivative of the manual steering command value.

With this configuration, it is possible to reduce the discomfort felt by the driver due to the automatic steering component included in the virtual damper reaction force according to the manual steering command value.

In the one embodiment of the present disclosure, when calculating the manual steering command value, the manual steering command value calculation unit uses a target virtual spring reaction force according to a lateral position for a reference vehicle position relative to a travel lane as a virtual spring reaction force in the equation of motion.

In the one embodiment of the present disclosure, the manual steering command value calculation unit calculates the manual steering command value using, as a virtual spring reaction force in the equation of motion, a virtual spring reaction force obtained by adding a virtual spring reaction force according to the automatic steering command value to a virtual spring reaction force according to the manual steering command value.

In the one embodiment of the present disclosure, the manual steering command value calculation unit calculates the manual steering command value using, as a moment of inertia in the equation of motion, a moment of inertia obtained by adding a moment of inertia according to the automatic steering command value to a moment of inertia according to the manual steering command value.

[Detailed Description of Embodiment of Disclosure]

An embodiment of the present disclosure will be described in detail below with reference to the accompanying drawings.

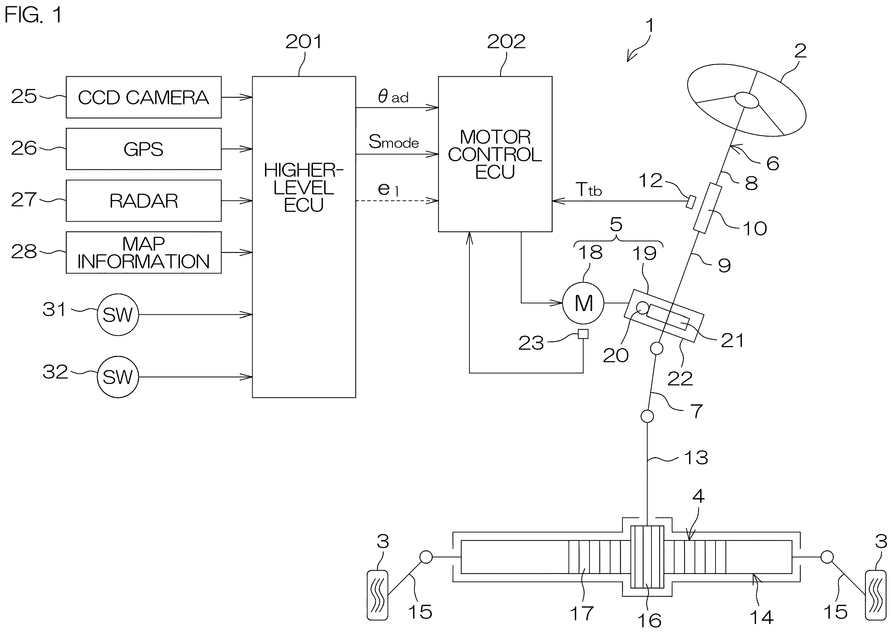

FIG. 1 is a schematic diagram showing a schematic configuration of an electric power steering system to which a motor control device according to an embodiment of the present disclosure is applied.

An electric power steering system 1 includes: a steering wheel 2 that is a steering member for steering a vehicle; a steering operation mechanism 4 that steers steered wheels 3 in conjunction with rotation of the steering wheel 2; and a steering assist mechanism 5 that assists a driver in steering. The steering wheel 2 and the steering operation mechanism 4 are mechanically connected via a steering shaft 6 and an intermediate shaft 7.

The steering shaft 6 includes an input shaft 8 connected to the steering wheel 2 and an output shaft 9 connected to the intermediate shaft 7. The input shaft 8 and the output shaft 9 are connected via a torsion bar 10 to be rotatable relative to each other.

A torque sensor 12 is disposed near the torsion bar 10. The torque sensor 12 detects torsion bar torque (steering torque) $T_{tb}$ applied to the steering wheel 2 based on the amount of relative rotational displacement between the input shaft 8 and the output shaft 9. In the present embodiment, for example, the torsion bar torque $T_{tb}$ that is detected by the torque sensor 12 is such that the torque for steering to the right is detected as a positive value and the torque for steering to the left is detected as a negative value. As the absolute value of the torsion bar torque $T_{tb}$ increases, the magnitude thereof increases.

The steering operation mechanism 4 is a rack and pinion mechanism including a pinion shaft 13 and a rack shaft 14 that is a steered shaft. The steered wheels 3 are connected to the ends of the rack shaft 14 via tie rods 15 and knuckle arms (not shown). The pinion shaft 13 is connected to the intermediate shaft 7. The pinion shaft 13 is configured to rotate in conjunction with steering of the steering wheel 2. A pinion 16 is connected to a distal end of the pinion shaft 13.

The rack shaft 14 extends linearly along a right-left direction of the vehicle. A rack 17 that meshes with the pinion 16 is formed on an intermediate portion of the rack shaft 14 in an axial direction. The pinion 16 and the rack 17 convert rotation of the pinion shaft 13 into axial movement of the rack shaft 14. The steered wheels 3 can be steered by moving the rack shaft 14 in the axial direction.

When the steering wheel 2 is steered (rotated), this rotation is transmitted to the pinion shaft 13 via the steering shaft 6 and the intermediate shaft 7. The pinion 16 and the rack 17 then convert rotation of the pinion shaft 13 into axial movement of the rack shaft 14. The steered wheels 3 are thus steered.

The steering assist mechanism 5 includes an electric motor 18 that generates a steering assist force (assist torque), and a speed reducer 19 that amplifies output torque of the electric motor 18 and transmits the amplified torque to the steering operation mechanism 4. The speed reducer 19 is a worm gear mechanism including a worm gear 20 and a worm wheel 21 that meshes with the worm gear 20. The speed reducer 19 is housed in a gear housing 22 that is a transmission mechanism housing.

Hereinafter, the reduction ratio (gear ratio) of the speed reducer 19 is represented by N. The reduction ratio N is defined as a ratio ($\theta_{wg}/\theta_{ww}$) of a worm gear angle $\theta_{wg}$ that is the rotational angle of the worm gear 20 to a worm wheel angle $\theta_{ww}$ that is the rotational angle of the worm wheel 21.

The worm gear 20 is rotationally driven by the electric motor 18. The worm wheel 21 is connected to the output shaft 9 to be rotatable together.

When the worm gear 20 is rotationally driven by the electric motor 18, the worm wheel 21 is rotationally driven such that motor torque is applied to the steering shaft 6 and the steering shaft 6 (output shaft 9) is rotated. The rotation of the steering shaft 6 is then transmitted to the pinion shaft 13 via the intermediate shaft 7. Rotation of the pinion shaft 13 is converted into axial movement of the rack shaft 14. The steered wheels 3 are thus steered. That is, rotationally driving the worm gear 20 using the electric motor 18 enables steering assist by the electric motor 18 and steering of the steered wheels 3. The electric motor 18 is provided with a rotational angle sensor 23 for detecting the rotational angle of a rotor of the electric motor 18.

The torque that is applied to the output shaft 9 (example of an object to be driven by the electric motor 18) includes motor torque from the electric motor 18 and disturbance torque $T_{lc}$ other than the motor torque. The disturbance torque $T_{lc}$ other than the motor torque includes the torsion bar torque $T_{tb}$, road reaction torque (road load torque) $T_{rl}$, and friction torque $T_f$.

The torsion bar torque $T_{tb}$ is torque that is applied from the steering wheel 2 side to the output shaft 9 due to a force that is applied to the steering wheel 2 by the driver, a force that is generated by steering inertia, etc.

The road reaction torque $T_{rl}$ is torque that is applied from the steered wheel 3 side to the output shaft 9 via the rack shaft 14 due to self-aligning torque that is exerted on tires, a force that is generated by a suspension and tire wheel alignment, a friction force of the rack and pinion mechanism, etc.

The vehicle is equipped with a CCD (Charge Coupled Device) camera 25 that captures an image of the road ahead of the vehicle in the advancing direction, a GPS (Global Positioning System) 26 that detects the position of the vehicle, a radar 27 that detects a road shape and obstacles, and a map information memory 28 that stores map information. The vehicle is further equipped with two mode switches 31, 32 for manually switching steering modes.

As described later, the steering modes include a manual steering mode in which steering is performed by manual driving, and a cooperative steering mode in which steering can be performed based on both manual driving and autonomous driving.

The CCD camera 25, the GPS 26, the radar 27, and the map information memory 28 are connected to a higher-level ECU (ECU: Electronic Control Unit) 201 that performs driving assistance control and autonomous driving control. The higher-level ECU 201 performs surrounding environment recognition, vehicle position estimation, route planning, etc. based on information obtained by the CCD camera 25, the GPS 26, and the radar 27, and the map information, and determines control target values for steering and drive actuators.

In the present embodiment, the higher-level ECU 201 sets an automatic steering command value $\theta_{ad}$ for automatic steering. In the present embodiment, automatic steering control is control for causing the vehicle to travel, for example, along a target trajectory. The automatic steering command value $\theta_{ad}$ is a target value of the steering angle for autonomously driving the vehicle along the target trajectory.

In the present embodiment, the automatic steering command value $\theta_{ad}$ is expressed as a rotational amount (rotational angle) from a neutral position of the output shaft 9. The rotational amount in a rightward steering direction from the neutral position is expressed as a positive value, and the rotational amount in a leftward steering direction from the neutral position is expressed as a negative value. The automatic steering command value $\theta_{ad}$ is set based on, for example, the vehicle speed, the lateral deviation from the target travel line (lane center line), and the yaw deviation of the vehicle from the target travel line. A process of setting such an automatic steering command value $\theta_{ad}$ is well known, and therefore will not be described in detail herein.

The automatic steering control (driving assistance control) may be, for example, lane keeping assist (LKA) control for assisting in steering such that the vehicle stays within the travel lane, or lane centering assist (LCA) control for assisting in steering such that the vehicle travels at the center of a travel lane.

The higher-level ECU 201 outputs a steering mode signal $S_{mode}$ indicating whether the steering mode (driving mode) is the manual steering mode (manual driving mode) or the cooperative steering mode (driving assistance mode) based on the operation on the first mode switch 31 and the second mode switch 32. Specifically, when the first mode switch 31 is turned ON by the driver, the higher-level ECU 201 outputs the steering mode signal $S_{mode}$ indicating that the steering mode is the manual steering mode. When the second mode switch 32 is turned ON by the driver, the higher-level ECU 201 outputs the steering mode signal $S_{mode}$ indicating that the steering mode is the cooperative steering mode.

The automatic steering command value $\theta_{ad}$ and the steering mode signal $S_{mode}$ are provided to a motor control ECU 202 via an in-vehicle network. The torsion bar torque $T_{tb}$ detected by the torque sensor 12 and an output signal from the rotational angle sensor 23 are input to the motor control ECU 202. The motor control ECU 202 controls the electric motor 18 based on these input signals and information provided from the higher-level ECU 201.

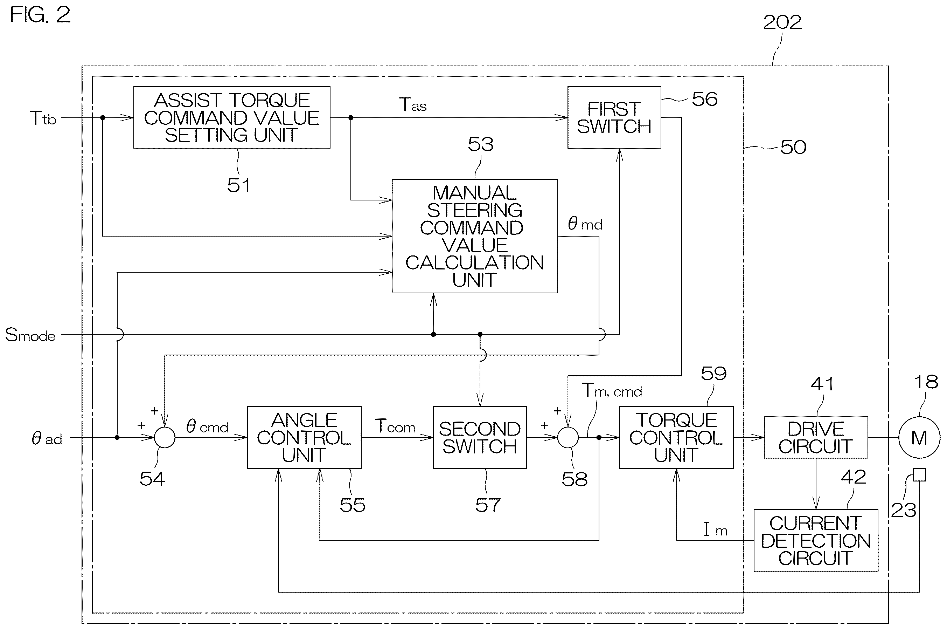

FIG. 2 is a block diagram illustrating an electrical configuration of the motor control ECU 202.

The motor control ECU 202 includes a microcomputer 50, a drive circuit (inverter circuit) 41 that is controlled by the microcomputer 50 and supplies electric power to the electric motor 18, and a current detection circuit 42 that detects a current (hereinafter referred to as "motor current $I_m$") that flows through the electric motor 18.

The microcomputer 50 includes a CPU and a memory (such as a ROM, a RAM, and a non-volatile memory), and functions as a plurality of functional processing units by executing a predetermined program. The plurality of functional processing units includes an assist torque command value setting unit 51, a manual steering command value calculation unit 53, an integrated angle command value calculation unit 54, an angle control unit 55, a first switch 56, a second switch 57, an addition unit 58, and a torque control unit (current control unit) 59.

The assist torque command value setting unit 51 sets an assist torque command value $T_{as}$ that is a target value of the assist torque necessary for a manual operation. The assist torque command value setting unit 51 sets the assist torque command value $T_{as}$ based on the torsion bar torque $T_{tb}$ detected by the torque sensor 12.

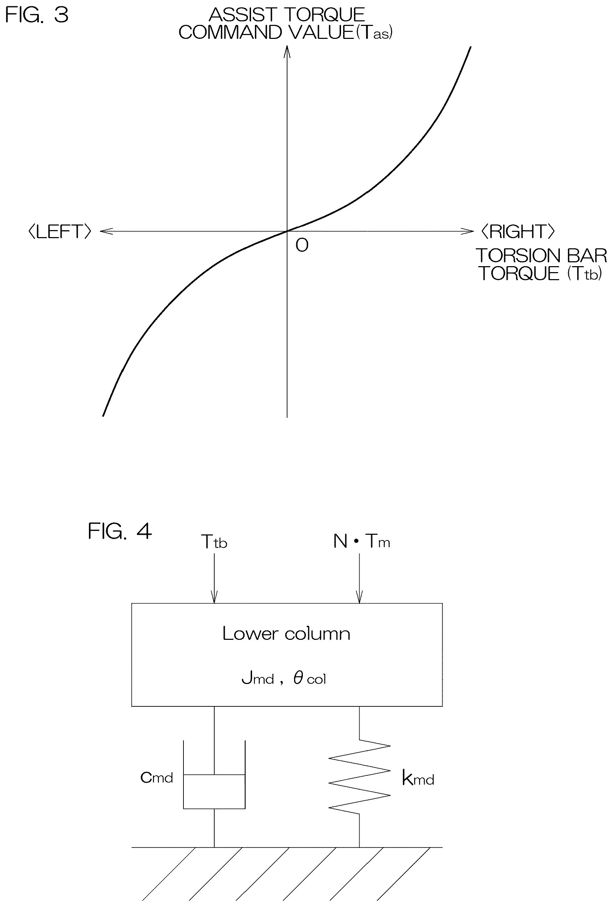

FIG. 3 is a graph showing an example of setting the assist torque command value $T_{as}$ with respect to the torsion bar torque $T_{tb}$.

The assist torque command value $T_{as}$ is set to a positive value when the electric motor 18 should generate a steering assist force for steering to the right, and is set to a negative value when the electric motor 18 should generate a steering assist force for steering to the left. The assist torque command value $T_{as}$ is positive for a positive value of the torsion bar torque $T_{tb}$, and is negative for a negative value of the torsion bar torque $T_{tb}$. The assist torque command value $T_{as}$ is set such that its absolute value increases as the absolute value of the torsion bar torque $T_{tb}$ increases.

The assist torque command value setting unit 51 may calculate the assist torque command value $T_{as}$ by multiplying the torsion bar torque $T_{tb}$ by a preset constant. The assist torque command value $T_{as}$ may be set in consideration of the vehicle speed.

The manual steering command value calculation unit 53 is provided to, when the driver operates the steering wheel 2 in the cooperative steering mode, set a steering angle (more exactly, a rotational angle $\theta_c$ of the output shaft 9) according to the steering wheel operation as a manual steering command value $\theta_{md}$. The manual steering command value calculation unit 53 generates the manual steering command value $\theta_{md}$ using the torsion bar torque $T_{tb}$ detected by the torque sensor 12, the assist torque command value $T_{as}$ set by the assist torque command value setting unit 51, and a target virtual spring reaction force $T_{tb,d}(e_l)$ set by a target virtual spring reaction force setting unit 52. The manual steering command value calculation unit 53 will be described in detail later.

The integrated angle command value calculation unit 54 calculates an integrated angle command value $\theta_{cmd}$ by adding the manual steering command value $\theta_{mg}$ to the automatic steering command value $\theta_{ad}$ set by the higher-level ECU 201.

The angle control unit 55 calculates an integrated motor torque command value $T_{com}$ based on the integrated angle command value $\theta_{cmd}$. The angle control unit 55 will be described in detail later.

The first switch 56 and the second switch 57 are turned ON and OFF in response to the input steering mode signal $S_{mode}$. Specifically, when the steering mode signal $S_{mode}$ indicating that the steering mode is the manual steering mode is input, the first switch 56 is turned ON and the second switch 57 is turned OFF.

When the steering mode signal $S_{mode}$ indicating that the steering mode is the cooperative steering mode is input, the first switch 56 is turned OFF and the second switch 57 is turned ON.

When the first switch 56 is ON and the second switch 57 is OFF, the addition unit 58 outputs the assist torque command value $T_{as}$ as a motor torque command value $T_{m,cmd}$ ($= T_{as}$). When the second switch 57 is ON and the first switch 56 is OFF, the addition unit 58 outputs the integrated motor torque command value $T_{com}$ output from the angle control unit 55 as the motor torque command value $T_{m,cmd}$ ($= T_{com}$).

The motor torque command value $T_{m,cmd}$ that is the output of the addition unit 58 is provided to the torque control unit 59.

The torque control unit 59 drives the drive circuit 41 such that the motor torque of the electric motor 18 is brought closer to the motor torque command value $T_{m,cmd}$. The torque control unit 59 will be described in detail later.

The manual steering command value calculation unit 53 will be described in detail.

First, description will be given of a method for setting the manual steering command value $\theta_{md}$ by the manual steering command value generation unit described in Patent Document 1.

The manual steering command value generation unit generates the manual steering command value $\theta_{md}$ using a reference EPS model in FIG. 4. The reference EPS model in FIG. 4 is an example of "reference model of steering device" according to the present disclosure.

The reference EPS model is a single inertia model including a lower column. The lower column corresponds to the output shaft 9 and the worm wheel 21. However, this model is merely an example, and an inertia model including a component other than the above (e.g., a rack bar) may also be used. In FIG. 4, $J_{md}$ is the inertia of the lower column (hereinafter referred to as "column inertia"), $\theta_{col}$ is the rotational angle of the lower column, and $T_{tb}$ is the torsion bar torque. The torsion bar torque $T_{tb}$, torque $N \cdot T_m$ acting on the output shaft 9 from the electric motor 18, and the road reaction torque (virtual reaction force) $T_{rl}$ are applied to the lower column.

The road reaction torque $T_{rl}$ is given by the following expression (1) using a spring constant $k_{md}$ of a virtual spring and a viscous damping coefficient $c_{md}$ of a virtual damper.
[Math. 1]

$$ T_{rl} = -k_{md} \cdot \theta_{col} - c_{md} \cdot \dot{\theta}_{col} \quad \cdot \cdot \cdot (1) $$

The spring constant $k_{md}$ and the viscous damping coefficient $c_{md}$ are determined through experiments, analyses, etc. in advance. Hereinafter, $k_{md} \cdot \theta_{col}$ may be referred to as a virtual spring reaction force, and $c_{md}(d\theta_{col}/dt)$ may be referred to as a virtual damper reaction force.

An equation of motion of the reference EPS model is given by the following expression (2).
[Math. 2]

$$ J_{md} \cdot \ddot{\theta}_{col} = T_{tb} + N \cdot T_m - k_{md} \cdot \theta_{col} - c_{md} \cdot \dot{\theta}_{col} \quad \cdot \cdot \cdot (2) $$

In the expression (2), $J_{md} \cdot d^2\theta_{col}/dt^2$ is the moment of inertia acting on the lower column.

The manual steering command value generation unit calculates the rotational angle $\theta_{col}$ of the lower column by solving the differential equation given by the expression (2) by substituting the torsion bar torque $T_{tb}$ detected by the torque sensor 12 into $T_{tb}$ and substituting the assist torque command value $T_{as}$ set by the assist torque command value setting unit 51 into $T_m$. The manual steering command value generation unit generates the obtained rotational angle $\theta_{col}$ of the lower column as the manual steering command value $\theta_{md}$. The method of setting the manual steering command value $\theta_{md}$ in this way will be referred to as a comparative method.

The equation of motion given by the expression (2) is equivalent to an equation of motion in which $T_m$ is replaced

by $T_{as}$ and $\theta_{col}$ is replaced by $\theta_{md}$.

In the comparative method, a virtual damper reaction force $c_{md} \cdot d\theta_{col}/dt$ (= $c_{md} \cdot d\theta_{md}/dt$) includes an automatic steering component according to a first derivative $d\theta_{ad}/dt$ of the automatic steering command value $\theta_{ad}$ as described later. The automatic steering component included in the virtual damper reaction force $c_{md} \cdot d\theta_{col}/dt$ (= $c_{md} \cdot d\theta_{md}/dt$) is not related to the driver's behavior. Therefore, the driver may feel discomfort.

Similarly, the moment of inertia $J_{md} \cdot d^2\theta_{col}/dt^2$ (= $J_{md} \cdot d^2\theta_{md}/dt^2$) acting on the lower column includes an automatic steering component according to a second derivative $d^2\theta_{ad}/dt^2$ of the automatic steering command value $\theta_{ad}$ as described later. The automatic steering component included in the moment of inertia $J_{md} \cdot d^2\theta_{col}/dt^2$ (= $J_{md} \cdot d^2\theta_{md}/dt^2$) is not related to the driver's behavior. Therefore, the driver may feel discomfort.

In the present embodiment, the manual steering command value calculation unit 53 calculates the manual steering command value $\theta_{md}$ using the equation of motion (2) of the reference EPS model described above. Specifically, in the present embodiment, the manual steering command value calculation unit 53 calculates the manual steering command value $\theta_{md}$ based on an equation of motion obtained by modifying the equation of motion (2) of the reference EPS model described above.

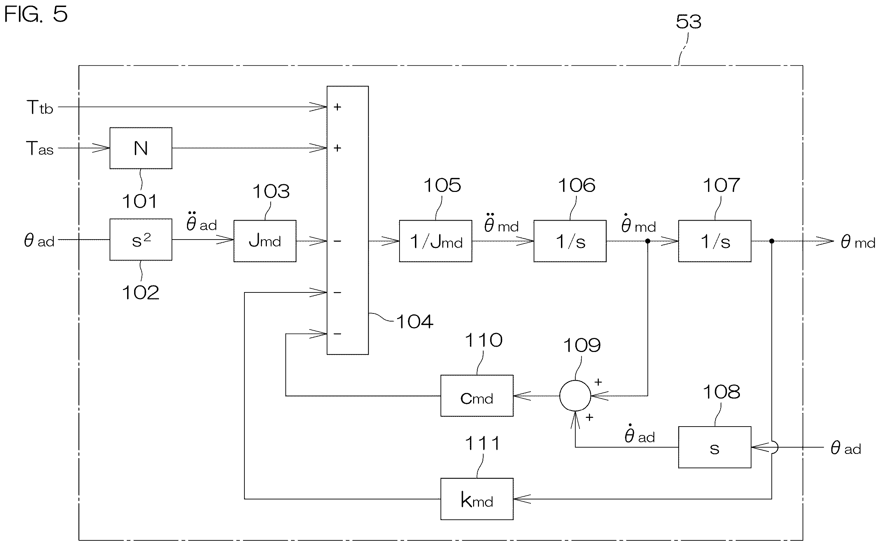

FIG. 5 is a block diagram showing the configuration of the manual steering command value calculation unit 53.

In FIG. 5, $J_{md}$ is the column inertia. s is a differential operator. $\theta_{md}$ is the manual steering command value, and corresponds to the rotational angle $\theta_{col}$ of the lower column in the comparative method. $c_{md}$ is the viscous damping coefficient of the virtual damper. $k_{md}$ is the spring constant of the virtual spring. The viscous damping coefficient $c_{md}$ of the virtual damper and the spring constant $k_{md}$ of the virtual spring are determined through experiments, analyses, etc. in advance.

The manual steering command value calculation unit 53 includes a reduction ratio multiplication unit 101, a second-order differentiation unit 102, an inertia multiplication unit 103, an addition/subtraction unit 104, an inertia division unit 105, a first integration unit 106, a second integration unit 107, a first-order differentiation unit 108, an addition unit 109, a virtual damper reaction force calculation unit 110, and a virtual spring reaction force calculation unit 111.

The reduction ratio multiplication unit 101 converts the assist torque command value $T_{as}$ for a rotary shaft of the electric motor 18 into an assist torque command value $N \cdot T_{as}$ for the output shaft 9 by multiplying the assist torque command value $T_{as}$ by the reduction ratio N of the speed reducer 19.

The second-order differentiation unit 102 obtains the second derivative of the automatic steering command value $\theta_{ad}$. The inertia multiplication unit 103 calculates a moment of inertia $J_{md} \cdot d^2\theta_{ad}/dt^2$ for the automatic steering command value $\theta_{ad}$ by multiplying the second derivative $d^2\theta_{ad}/dt^2$ of the automatic steering command value $\theta_{ad}$ by the column inertia $J_{md}$.

The torsion bar torque $T_{tb}$, the assist torque command value $N \cdot T_{as}$ for the output shaft 9, the moment of inertia $J_{md} \cdot d^2\theta_{ad}/dt^2$ for the automatic steering command value $\theta_{ad}$, **a virtual** damper reaction force $c_{md}(d\theta_{md}/dt + d\theta_{ad}/dt)$ provided from the virtual damper reaction force calculation unit 110, and a virtual spring reaction force $k_{md} \cdot \theta_{md}$ provided from the virtual spring reaction force calculation unit 111 are input to the addition/subtraction unit 104.

The addition/subtraction unit 104 adds the assist torque command value $N \cdot T_{as}$ for the output shaft 9 to the torsion bar torque $T_{tb}$, and subtracts the moment of inertia $J_{md} \cdot d^2\theta_{ad}/dt^2$ for the automatic steering command value $\theta_{ad}$, the virtual damper reaction force $c_{md}(d\theta_{md}/dt + d\theta_{ad}/dt)$, and the virtual spring reaction force $k_{md} \cdot \theta_{md}$ from the addition result. Therefore, the addition/subtraction unit 104 calculates a moment of inertia $J_{md} \cdot d^2\theta_{md}/dt^2$ (= $T_{tb}$ + $N \cdot T_{as}$ - $J_{md} \cdot d^2\theta_{ad}/dt^2$ - $c_{md}(d\theta_{md}/dt + d\theta_{ad}/dt)$ - $k_{md} \cdot \theta_{md}$) that corresponds to $J_{md} \cdot d^2\theta_{col}/dt^2$ on the left side of the above expression (2).

The inertia division unit 105 calculates a second derivative $d^2\theta_{md}/dt^2$ of the manual steering command value $\theta_{md}$ by dividing the moment of inertia $J_{md} \cdot d^2\theta_{md}/dt^2$ calculated by the addition/subtraction unit 104 by the column inertia $J_{md}$.

The first integration unit 106 calculates a first derivative $d\theta_{md}/dt$ of the manual steering command value $\theta_{md}$ by integrating the second derivative $d^2\theta_{md}/dt^2$ of the manual steering command value $\theta_{md}$.

The second integration unit 107 calculates the manual steering command value $\theta_{mg}$ by integrating the first derivative $d\theta_{md}/dt$ of the manual steering command value $\theta_{md}$. The manual steering command value $\theta_{md}$ is output from the manual steering command value calculation unit 53.

The first-order differentiation unit 108 obtains the first derivative of the automatic steering command value $\theta_{ad}$.

The addition unit 109 adds the first derivative $d\theta_{ad}/dt$ of the automatic steering command value $\theta_{ad}$ calculated by the first-order differentiation unit 108 to the first derivative $d\theta_{md}/dt$ of the manual steering command value $\theta_{md}$ calculated by the first integration unit 106.

The virtual damper reaction force calculation unit 110 calculates the virtual damper reaction force $c_{md}(d\theta_{md}/dt + d\theta_{ad}/dt)$ by multiplying the addition result $(d\theta_{md}/dt + d\theta_{ad}/dt)$ from the addition unit 109 by the viscous damping coefficient $c_{md}$. The virtual damper reaction force $c_{md}(d\theta_{md}/dt + d\theta_{ad}/dt)$ is fed back to the addition/subtraction unit 104.

The virtual spring reaction force calculation unit 111 calculates the virtual spring reaction force $k_{md} \cdot \theta_{md}$ by multiplying the manual steering command value $\theta_{md}$ calculated by the second integration unit 107 by the spring constant $k_{md}$. The virtual spring reaction force $k_{md} \cdot \theta_{md}$ is fed back to the addition/subtraction unit 104.

That is, the manual steering command value calculation unit 53 calculates the manual steering command value

$\theta_{md}$ based on an equation of motion given by the following expression (3).
[Math. 3]

$$J_{md} \cdot \ddot{\theta}_{md} + J_{md} \cdot \ddot{\theta}_{ad} = T_{tb} + N \cdot T_{as} - c_{md} \cdot \dot{\theta}_{md} - c_{md} \cdot \dot{\theta}_{ad} - k_{md} \cdot \theta_{md} \quad \cdots (3)$$

In the expression (3), $J_{md} \cdot d2\theta_{md}/dt2 + J_{md} \cdot d2\theta_{ad}/dt2$ is the moment of inertia. $c_{md} \cdot d\theta_{md}/dt + c_{md} \cdot d2\theta_{ad}/dt2$ is the virtual damper reaction force. $k_{md} \cdot \theta_{md}$ is the virtual spring reaction force.

That is, the manual steering command value calculation unit 53 calculates the manual steering command value $\theta_{md}$ using $(J_{md} \cdot d2\theta_{md}/dt2 + J_{md} \cdot d2\theta_{ad}/dt2)$ and $(c_{md} \cdot d\theta_{md}/dt + c_{md} \cdot d\theta_{ad}/dt)$ as the moment of inertia $J_{md} \cdot d2\theta_{col}/dt2$ and the virtual damper reaction force $c_{md}.d\theta_{col}/dt$ in the above expression (2), respectively.

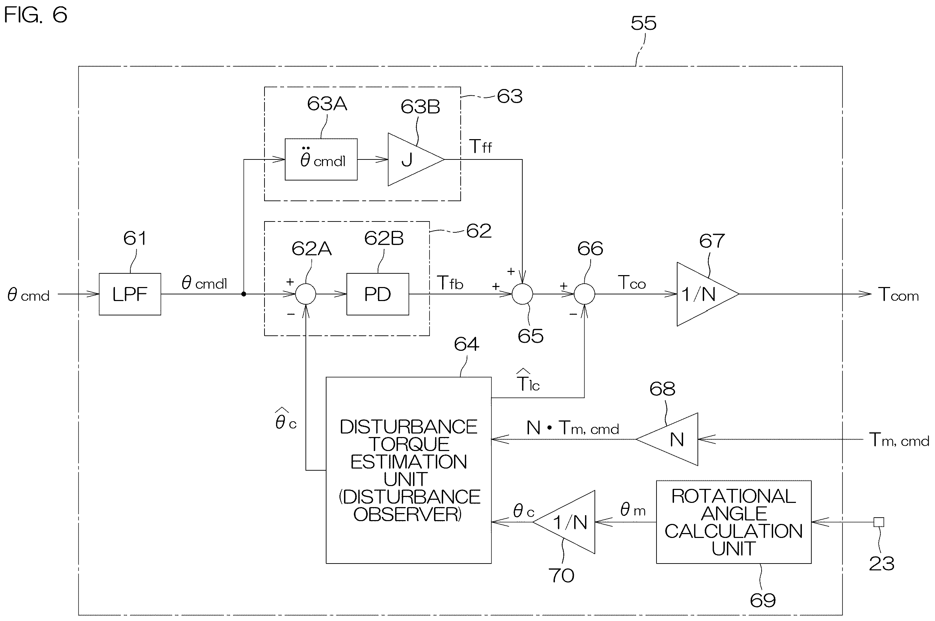

FIG. 6 is a block diagram showing the configuration of the angle control unit 55.

The angle control unit 55 calculates the integrated motor torque command value $T_{com}$ based on the integrated angle command value $\theta_{cmd}$. The angle control unit 55 includes a low-pass filter (LPF) 61, a feedback control unit 62, a feedforward control unit 63, a disturbance torque estimation unit 64, a torque addition unit 65, a disturbance torque compensation unit 66, a first reduction ratio division unit 67, a reduction ratio multiplication unit 68, a rotational angle calculation unit 69, and a second reduction ratio division unit 70.

The reduction ratio multiplication unit 68 converts the motor torque command value $T_{m,cmd}$ calculated by the addition unit 58 (see FIG. 2) into an output shaft torque command value $N \cdot T_{m,cmd}$ that acts on the output shaft 9 (worm wheel 21) by multiplying the motor torque command value $T_{m,cmd}$ by the reduction ratio N of the speed reducer 19.

The rotational angle calculation unit 69 calculates a rotor rotational angle $\theta_m$ of the electric motor 18 based on an output signal from the rotational angle sensor 23. The second reduction ratio division unit 70 converts the rotor rotational angle $\theta_m$ calculated by the rotational angle calculation unit 69 into a rotational angle (actual steering angle) $\theta_c$ of the output shaft 9 by dividing the rotor rotational angle $\theta_m$ by the reduction ratio N.

In the present embodiment, the actual steering angle $\theta_c$ is expressed as a rotational amount (rotational angle) from the neutral position of the output shaft 9. The rotational amount in the rightward steering direction from the neutral position is expressed as a positive value, and the rotational amount in the leftward steering direction from the neutral position is expressed as a negative value.

The low-pass filter 61 performs a low-pass filtering process on the integrated angle command value $\theta_{cmd}$. An integrated angle command value $\theta_{cmdl}$ after the low-pass filtering process is provided to the feedback control unit 62 and the feedforward control unit 63. The low-pass filter 61 may be omitted.

The feedback control unit 62 is provided to bring an estimated steering angle value $^\wedge\theta$ calculated by the disturbance torque estimation unit 64 closer to the integrated angle command value $\theta_{cmdl}$ after the low-pass filtering process. The feedback control unit 62 includes an angle deviation calculation unit 62A and a PD control unit 62B. The angle deviation calculation unit 62A calculates a deviation $\Delta\theta$ (= $\theta_{cmdl}$ - $^\wedge\theta_c$) between the integrated angle command value $\theta_{cmdl}$ and the estimated steering angle value $^\wedge\theta_c$. The angle deviation calculation unit 62A may calculate, as the angle deviation $\Delta\theta$, a deviation ($\theta_{cmdl}$ - $\theta_c$) between the integrated angle command value $\theta_{cmdl}$ and the actual steering angle $\theta_c$ calculated by the second reduction ratio division unit 70.

The PD control unit 62B calculates feedback control torque $T_{fb}$ by performing PD calculation (proportional-derivative calculation) for the angle deviation $\Delta\theta$ calculated by the angle deviation calculation unit 62A. The feedback control torque $T_{fb}$ is provided to the torque addition unit 65.

The feedforward control unit 63 is provided to improve control response by compensating for a delay in response due to the inertia of the electric power steering system 1. The feedforward control unit 63 includes an angular acceleration calculation unit 63A and an inertia multiplication unit 63B. The angular acceleration calculation unit 63A calculates a target angular acceleration $d2\theta_{cmdl}/dt2$ by obtaining the second derivative of the integrated angle command value $\theta_{cmdl}$.

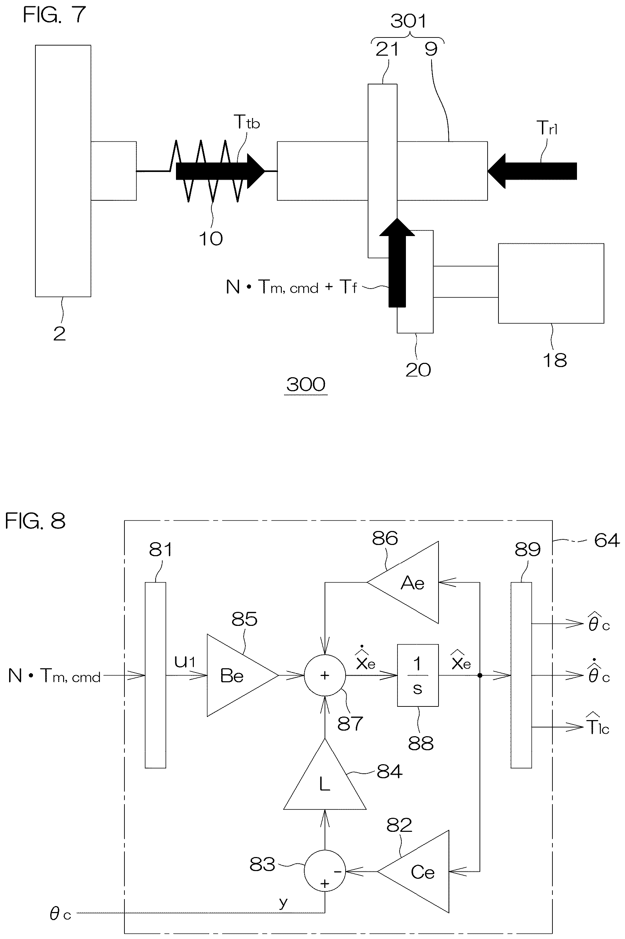

The inertia multiplication unit 63B calculates feedforward control torque $T_{ff}$ (= $J \cdot d2\theta_{cmdl}/dt2$) by multiplying the target angular acceleration $d2\theta_{cmdl}/dt2$ calculated by the angular acceleration calculation unit 63A by inertia J of the electric power steering system 1. The inertia J is obtained from, for example, a physical model of the electric power steering system 1 (see FIG. 7) described later. The feedforward control torque $T_{ff}$ is provided to the torque addition unit 65 as an inertia compensation value.

The torque addition unit 65 calculates a basic torque command value ($T_{fb}$ + $T_{ff}$) by adding the feedforward control torque $T_{ff}$ to the feedback control torque $T_{fb}$.

The disturbance torque estimation unit 64 is provided to estimate non-linear torque (disturbance torque: torque other than the motor torque) that is generated as disturbance in a plant (object to be controlled by the electric motor 18). The disturbance torque estimation unit 64 estimates the disturbance torque (disturbance load) $T_{lc}$, the steering angle $\theta$, and a steering angle derivative (angular velocity) $d\theta_c/dt$ based on the output shaft torque command value $N \cdot T_{m,cmd}$ and the actual steering angle $\theta_c$. The estimated values of the disturbance torque $T_{1c}$, the steering angle $\theta_c$, and the steering angle

derivative (angular velocity) $d\theta_c/dt$ are represented by $^{\wedge}T_{lc}$, $^{\wedge}\theta_c$, and $d^{\wedge}\theta_c/dt$, respectively. The disturbance torque estimation unit 64 will be described in detail later.

The estimated disturbance torque value $^{\wedge}T_{lc}$ calculated by the disturbance torque estimation unit 64 is provided to the disturbance torque compensation unit 66 as a disturbance torque compensation value. The estimated steering angle value $^{\wedge}\theta_c$ calculated by the disturbance torque estimation unit 64 is provided to the angle deviation calculation unit 62A.

The disturbance torque compensation unit 66 calculates an integrated torque command value $T_{co}$ (= $T_{fb}$ + $T_{ff}$ - $^{\wedge}T_{lc}$) by subtracting the estimated disturbance torque value $^{\wedge}T_{lc}$ from the basic torque command value ($T_{fb}$ + $T_{ff}$). The integrated torque command value $T_{co}$ (torque command value for the output shaft 9) with the disturbance torque compensated for is thus obtained.

The integrated torque command value $T_{co}$ is provided to the first reduction ratio division unit 67. The first reduction ratio division unit 67 calculates the integrated motor torque command value $T_{com}$ (torque command value for the electric motor 18) by dividing the integrated torque command value $T_{co}$ by the reduction ratio N. The integrated motor torque command value $T_{com}$ is provided to the second switch 57 (see FIG. 2).

The disturbance torque estimation unit 64 will be described in detail. The disturbance torque estimation unit 64 is a disturbance observer that estimates the disturbance torque $T_{1c}$, the steering angle $\theta_c$, and the angular velocity $d\theta_c/dt$ using, for example, a physical model 300 of the electric power steering system 1 shown in FIG. 7.

The physical model 300 includes a plant (example of an object to be driven by the motor) 301 that includes the output shaft 9 and the worm wheel 21 fixed to the output shaft 9. The torsion bar torque $T_{tb}$ is applied from the steering wheel 2 to the plant 301 via the torsion bar 10, and the road reaction torque $T_{rl}$ is applied from the steered wheel 3 side to the plant 301.

Moreover, the output shaft torque command value $N \cdot T_{m,cmd}$ is applied to the plant 301 via the worm gear 20, and the friction torque $T_f$ is applied to the plant 301 due to the friction between the worm wheel 21 and the worm gear 20.

An equation of motion for the inertia of the physical model 300 is given by the following expression (4), where J is the inertia of the plant 301.

[Math. 4]

$$J\ddot{\theta}_c = N \cdot T_{m,cmd} + T_{lc} \quad \cdots (4)$$
$$T_{lc} = T_{tb} + T_{rl} + T_f$$

$d^2\theta_c/dt^2$ is the angular acceleration of the plant 301. N is the reduction ratio of the speed reducer 19. $T_{lc}$ represents the disturbance torque other than the motor torque that is applied to the plant 301. While the disturbance torque $T_{lc}$ is shown as the sum of the torsion bar torque $T_{tb}$, the road reaction torque $T_{rl}$, and the friction torque $T_f$ in the present embodiment, the disturbance torque $T_{lc}$ actually includes torque other than these.

An equation of state for the physical model 300 in FIG. 7 is given by the following expression (5).

[Math. 5]

$$\begin{cases} \dot{x} = Ax + B_1 u_1 + B_2 u_2 \\ y = Cx + Du_1 \end{cases} \quad \cdots (5)$$

In the above expression (5), x is a state variable vector, $u_1$ is a known input vector, $u_2$ is an unknown input vector, and y is an output vector (measured value). In the above expression (5), A is a system matrix, $B_1$ is a first input matrix, $B_2$ is a second input matrix, C is an output matrix, and D is a direct feedthrough matrix.

The above equation of state is extended to a system including the unknown input vector $u_2$ as one of the states. An equation of state of the extended system (extended equation of state) is given by the following expression (6).

[Math. 6]

$$\begin{cases} \dot{x}_e = A_e x_e + B_e u_1 \\ y = C_e x_e \end{cases} \quad \cdots (6)$$

In the above expression (6), $x_e$ is a state variable vector of the extended system, and is given by the following expression (7).

[Math. 7]

$$Xe = \begin{bmatrix} x \\ u2 \end{bmatrix} \quad \cdots (7)$$

In the above expression (6), $A_e$ is a system matrix of the extended system, $B_e$ is a known input matrix of the extended system, and $C_e$ is an output matrix of the extended system.

A disturbance observer (extended state observer) given by the equation of the following expression (8) is constructed from the extended equation of state given by the above expression (6).

[Math. 8]

$$\begin{cases} \dot{\hat{X}}e = Ae\hat{X}e + BeU1 + L(y - \hat{y}) \\ \hat{y} = Ce\hat{X}e \end{cases} \quad \cdots (8)$$

In the expression (8), $^\wedge x_e$ represents an estimated value of $x_e$. L is an observer gain. $^\wedge y$ represents an estimated value of y. $^\wedge x_e$ is given by the following expression (9).

[Math. 9]

$$\hat{X}e = \begin{bmatrix} \hat{\theta}_c \\ \dot{\hat{\theta}}_c \\ \hat{T}_{lc} \end{bmatrix} \quad \cdots (9)$$

In the expression (9), $^\wedge\theta_c$ is an estimated value of $\theta_c$, and $^\wedge T_{lc}$ is an estimated value of $T_{lc}$.

The disturbance torque estimation unit 64 calculates the state variable vector $^\wedge x_e$ based on the equation of the above expression (8).

FIG. 8 is a block diagram showing the configuration of the disturbance torque estimation unit 64.

The disturbance torque estimation unit 64 includes an input vector input unit 81, an output matrix multiplication unit 82, a first addition unit 83, a gain multiplication unit 84, an input matrix multiplication unit 85, a system matrix multiplication unit 86, a second addition unit 87, an integration unit 88, and a state variable vector output unit 89.

The output shaft torque command value $N \cdot T_{m,cmd}$ calculated by the reduction ratio multiplication unit 68 (see FIG. 6) is provided to the input vector input unit 81. The input vector input unit 81 outputs the input vector $u_1$.

The output of the integration unit 88 is the state variable vector $^\wedge x_e$ (see the above expression (9)). At the start of the calculation, an initial value is given as the state variable vector $^\wedge x_e$. The initial value of the state variable vector $^\wedge x_e$ is, for example, 0.

The system matrix multiplication unit 86 multiplies the state variable vector $^\wedge x_e$ by the system matrix $A_e$. The output matrix multiplication unit 82 multiplies the state variable vector $^\wedge x_e$ by the output matrix $C_e$.

The first addition unit 83 subtracts the output $(C_e \cdot {^\wedge x_e})$ of the output matrix multiplication unit 82 from the output vector (measured value) y that is the actual steering angle $\theta_c$ calculated by the second reduction ratio division unit 70 (see FIG. 6). That is, the first addition unit 83 calculates the difference $(y - {^\wedge y})$ between the output vector y and the estimated output vector value $^\wedge y \, (= C_e \cdot {^\wedge x_e})$. The gain multiplication unit 84 multiplies the output $(y - {^\wedge y})$ of the first addition unit 83 by the observer gain L (see the above expression (8)).

The input matrix multiplication unit 85 multiplies the input vector $u_1$ output from the input vector input unit 81 by the input matrix $B_e$. The second addition unit 87 calculates a derivative $d^\wedge x_e/dt$ of the state variable vector by adding the output $(B_e \cdot u_1)$ of the input matrix multiplication unit 85, the output $(A_e \cdot {^\wedge x_e})$ of the system matrix multiplication unit 86, and the output $(L(y - {^\wedge y}))$ of the gain multiplication unit 84. The integration unit 88 calculates the state variable vector $^\wedge x_e$ by integrating the output $(d^\wedge x_e/dt)$ of the second addition unit 87. The state variable vector output unit 89 calculates the estimated disturbance torque value $^\wedge T_{lc}$, the estimated steering angle value $^\wedge\theta_c$, and the estimated angular velocity value $d^\wedge\theta_c/dt$ based on the state variable vector $^\wedge x_e$.

Unlike the extended state observer described above, a typical disturbance observer is composed of an inverse model of the plant and a low-pass filter. An equation of motion of the plant is given by the expression (3) as described above. The inverse model of the plant is therefore given by the following expression (10).

[Math. 10]

$$T_{lc} = J\ddot{\theta}_c - N \cdot T_{m,cmd} \quad \cdots (10)$$

The inputs to the typical disturbance observer are $J \cdot d^2\theta_c/dt^2$ and $N \cdot T_{m,cmd}$. Since the second derivative of the actual steering angle $\theta_c$ is used, noise of the rotational angle sensor 23 has a great influence. The extended state observer according to the above embodiment estimates the disturbance torque using an integral type. Therefore, the influence of noise due to differentiation can be reduced.

The typical disturbance observer composed of the inverse model of the plant and the low-pass filter may be used as the disturbance torque estimation unit 64.

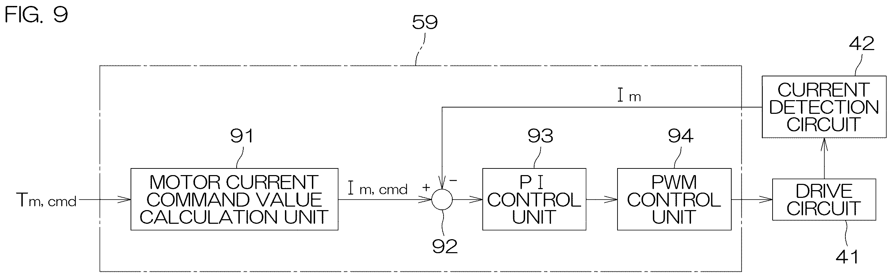

FIG. 9 is a schematic diagram showing the configuration of the torque control unit 59.

The torque control unit 59 (see FIG. 2) includes a motor current command value calculation unit 91, a current deviation calculation unit 92, a PI control unit 93, and a PWM (Pulse Width Modulation) control unit 94.

The motor current command value calculation unit 91 calculates a motor current command value $I_{m,cmd}$ by dividing the motor torque command value $T_{m,cmd}$ calculated by the addition unit 58 (see FIG. 2) by a torque constant $K_t$ of the electric motor 18.

The current deviation calculation unit 92 calculates a deviation $\Delta I$ (= $I_{m,cmd}$ - $I_m$) between the motor current command value $I_{m,cmd}$ obtained by the motor current command value calculation unit 91 and the motor current $I_m$ detected by the current detection circuit 42.

The PI control unit 93 generates a drive command value for controlling the motor current I flowing through the electric motor 18 to the motor current command value $I_{m,cmd}$ by performing PI calculation (proportional-integral calculation) for the current deviation $\Delta I$ calculated by the current deviation calculation unit 92. The PWM control unit 94 generates a PWM control signal with a duty cycle corresponding to the drive command value, and supplies the PWM control signal to the drive circuit 41. Electric power corresponding to the drive command value is thus supplied to the electric motor 18.

The operation of the present embodiment will be described below with reference to FIG. 2.

In the present embodiment, the manual steering mode refers to a steering mode in which the electric motor 18 is controlled based only on the assist torque command value $T_{as}$. The cooperative steering mode refers to a steering mode in which the electric motor 18 is controlled based on the integrated angle command value $\theta_{cmd}$ obtained by considering both the automatic steering command value $\theta_{ad}$ and the manual steering command value $\theta_{md}$.

When the steering mode is set to the manual steering mode, the first switch 56 is ON and the second switch 57 is OFF. When the steering mode is set to the cooperative steering mode, the first switch 56 is OFF and the second switch 57 is ON. That is, the motor control ECU 202 can switch the steering mode between the manual steering mode and the cooperative steering mode by the driver's operation on the mode switches 31, 32.

In the above embodiment, the steering mode can be switched between the cooperative steering mode in which the electric motor 18 can be controlled based on the integrated angle command value $\theta_{cmd}$ and the manual steering mode in which the electric motor 18 can be controlled based only on the assist torque command value $T_{as}$.

That is, in the electric power steering system 1 that can control the electric motor 18 based on the integrated angle command value $\theta_{cmd}$, the electric motor 18 can be controlled based only on the assist torque command value $T_{as}$.

In the above embodiment, in the manual steering mode, the electric motor 18 is controlled based only on the assist torque command value $T_{as}$. Therefore, the driver can receive the actual road reaction torque.

In the above embodiment, in the cooperative steering mode, the manual steering command value calculation unit 53 calculates the manual steering command value $\theta_{md}$ using $(J_{md} \cdot d^2\theta_{md}/dt^2 + J_{md} \cdot d^2\theta_{ad}/dt^2)$ and $(c_{md} \cdot d\theta_{md}/dt + c_{md} \cdot d\theta_{ad}/dt)$ as the moment of inertia $J_{md} \cdot d^2\theta_{col}/dt^2$ and the virtual damper reaction force $c_{md} \cdot d\theta_{col}/dt$ in the above expression (2), respectively.

Thus, it is possible to reduce the discomfort felt by the driver due to the automatic steering component included in the virtual damper reaction force $c_{md} \cdot d\theta_{col}/dt$ in the above expression (2) and the automatic steering component included in the moment of inertia $J_{md} \cdot d^2\theta_{col}/dt^2$ in the above expression (2) in the cooperative steering mode. This point will be described below.

Referring to FIGS. 2 and 6, in the cooperative steering mode, the electric motor 18 is controlled such that the actual steering angle $\theta_c$ follows the integrated angle command value $\theta_{cmd}$. Assuming that the actual steering angle $\theta_c$ completely follows the integrated angle command value $\theta_{cmd}$, a relationship of $\theta_{md} = \theta_c - \theta_{ad}$ holds.

In this case, the virtual damper reaction force $c_{md} \cdot d\theta_{md}/dt$ for the manual steering command value $\theta_{md}$ in the above expression (3) is given by the following expression (11).

[Math. 11]

$$\text{c}_{md} \cdot \dot{\theta}_{md} = \text{c}_{md} \cdot (\dot{\theta}_c - \dot{\theta}_{ad})$$

$$= \text{c}_{md} \cdot \dot{\theta}_c - \text{c}_{md} \cdot \dot{\theta}_{ad} \quad \cdots (11)$$

The moment of inertia $J_{md} \cdot d^2\theta_{md}/dt^2$ for the manual steering command value $\theta_{md}$ in the above expression (3) is given by the following expression (12).
[Math. 12]

$$J_{md} \cdot \ddot{\theta}_{md} = J_{md} \cdot (\ddot{\theta}_c - \ddot{\theta}_{ad})$$

$$= J_{md} \cdot \ddot{\theta}_c - J_{md} \cdot \ddot{\theta}_{ad} \quad \cdots (12)$$

That is, $c_{md} \cdot d\theta_{md}/dt$ includes an actual steering angle component $c_{md} \cdot d\theta_c/dt$ according to the first derivative of the actual steering angle $\theta_c$, and an automatic steering component $-c_{md} \cdot d\theta_{ad}/dt$ according to the first derivative of the automatic steering command value $\theta_{ad}$. Similarly, $J_{md} \cdot d^2\theta_{md}/dt^2$ includes an actual steering angle component $J_{md} \cdot d^2\theta_c/dt^2$ according to the second derivative of the actual steering angle $\theta_c$, and an automatic steering component $-J_{md} \cdot d^2\theta_{ad}/dt^2$ according to the second derivative of the automatic steering command value $\theta_{ad}$.
The actual steering angle components $c_{md} \cdot d\theta_c/dt$ and $J_{md} \cdot d^2\theta_c/dt^2$ correspond to the driver's behavior. Therefore, the driver does not feel discomfort. The automatic steering components $-c_{md} \cdot d\theta_{ad}/dt$ and $-J_{md} \cdot d^2\theta_{ad}/dt^2$ are not related to the driver's behavior. Therefore, the driver may feel discomfort. Since the absolute value of $-d\theta_{ad}/dt$ is larger than the absolute value of $-d^2\theta_{ad}/dt^2$, the automatic steering component $-c_{md} \cdot d\theta_{ad}/d\theta$ of the virtual damper reaction force is particularly likely to have an adverse effect on the steering feel.
In the present embodiment, the equation of motion given by the above expression (3) includes, as the virtual damper reaction force, the virtual damper reaction force $c_{md} \cdot d\theta_{ad}/dt$ for the automatic steering command value $\theta_{ad}$ in addition to the virtual damper reaction force $c_{md} \cdot d\theta_{md}/dt$ for the manual steering command value $\theta_{md}$. The equation of motion given by the above expression (3) includes, as the moment of inertia, the moment of inertia $J_{md}.d^2\theta_{ad}/dt^2$ for the automatic steering command value $\theta_{ad}$ in addition to the moment of inertia $J_{md} \cdot d^2\theta_{md}/dt^2$ for the manual steering command value $\theta_{md}$.
Thus, it is possible to reduce the automatic steering component $-c_{md} \cdot d\theta_{ad}/dt$ included in the virtual damper reaction force $c_{md} \cdot d\theta_{md}/dt$ for the manual steering command value $\theta_{md}$. Similarly, it is possible to reduce the automatic steering component $-J_{md} \cdot d^2\theta_{ad}/dt^2$ included in the moment of inertia $J_{md} \cdot d^2\theta_{md}/dt^2$ for the manual steering command value $\theta_{md}$. Accordingly, the discomfort felt by the driver can be reduced in the cooperative steering mode.
Assuming that a relationship of $\theta_{md} = \theta_c - \theta_{ad}$ holds, the equation of motion given by the expression (3) is as shown in the following expression (13).
[Math. 13]

$$J_{md} \cdot \ddot{\theta}_c = T_{tb} + N \cdot T_{as} - \text{c}_{md} \cdot \dot{\theta}_c - k_{md} \cdot \theta_{md} \quad \cdots (13)$$

In this case, the automatic steering component $-c_{md} \cdot d\theta_{ad}/dt$ included in $c_{md} \cdot d\theta_{md}/dt$ is compensated, and only the actual steering angle component $c_{md} \cdot d\theta_c/dt$ for the actual steering angle $\theta_c$ remains. Further, the automatic steering component $-J_{md} \cdot d^2\theta_{ad}/dt^2$ included in $J_{md} \cdot d^2\theta_{md}/dt^2$ is compensated, and only $J_{md} \cdot d^2\theta_c/dt^2$ for the actual steering angle $\theta_c$ remains.
In the above embodiment, the basic torque command value $(T_{fb} + T_{ff})$ is calculated based on the integrated angle command value $\theta_{cmd}$, and the basic torque command value $(T_{fb} + T_{ff})$ is corrected by the estimated disturbance torque value $^\wedge T_{1c}$ calculated by the disturbance torque estimation unit 64. Therefore, the influence of disturbance torque on angle control performance can be reduced. As a result, highly accurate angle control can be implemented.
Modifications of the motor control ECU 202 will be described below. In the following modifications of the motor control ECU 202, the operation in the manual steering mode is the same as in the above embodiment. Therefore, the following description will focus on the operation in the cooperative steering mode.

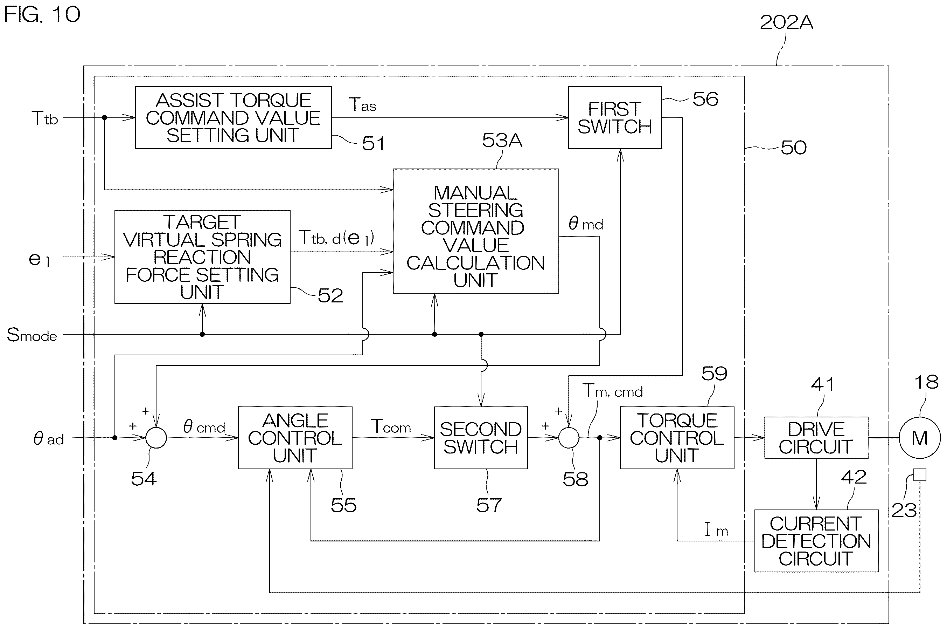

FIG. 10 is a block diagram showing a first modification of the motor control ECU. In FIG. 10, portions corresponding to those in FIG. 2 are represented by the same signs as those in FIG. 2.
When a motor control ECU 202A in FIG. 10 is used as the motor control ECU, the higher-level ECU 201 outputs a lateral deviation $e_l$ from a currently set target travel line as indicated by the dashed line in FIG. 1 in addition to the mode signal $S_{mode}$ and the automatic steering command value $\theta_{ad}$. In the present embodiment, the lateral deviation $e_l$ is a distance from the currently set target travel line (lane center line) to a reference position of the vehicle (hereinafter referred to as "reference vehicle position"). The reference vehicle position is set as a predetermined position at the width center of the vehicle.

In the present embodiment, the lateral deviation $e_l$ is 0 ($e_l = 0$) when the reference vehicle position is on the target travel line, a positive value ($e_l > 0$) when the reference vehicle position is rightward of the target travel line in the advancing direction, and a negative value ($e_l < 0$) when the reference vehicle position is leftward of the target travel line in the advancing direction.

The motor control ECU 202A in FIG. 10 is different from the motor control ECU 202 in FIG. 2 in terms of (1) and (2) below.

(1) The microcomputer 50 of the motor control ECU 202A additionally includes a target virtual spring reaction force setting unit 52 as a functional processing unit.

(2) The configuration of a manual steering command value calculation unit 53A is different from the configuration of the manual steering command value calculation unit 53 in FIG. 2.

In the cooperative steering mode, the target virtual spring reaction force setting unit 52 sets a target virtual spring reaction force $T_{tb,d}(e_l)$ based on the lateral deviation $e_l$ provided from the higher-level ECU 201.

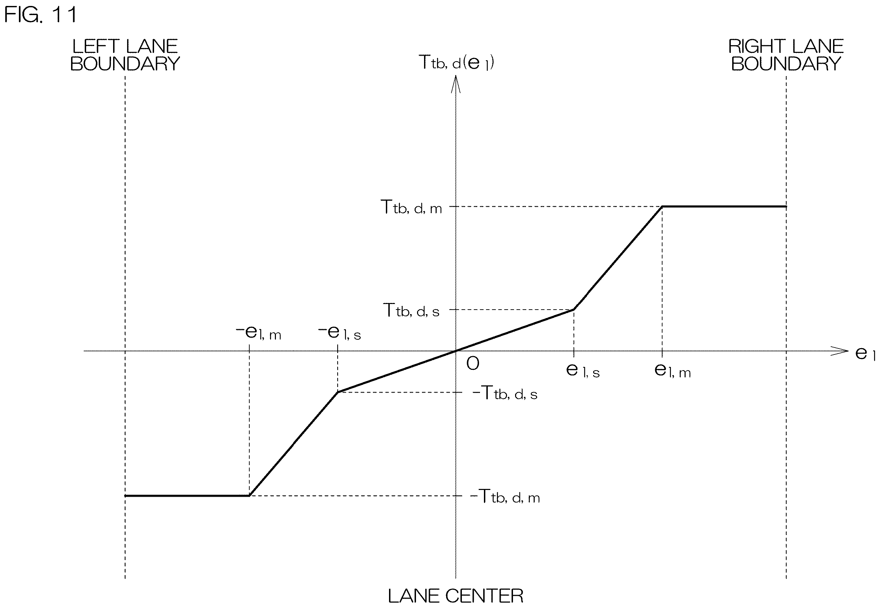

FIG. 11 is a graph showing an example of setting the target virtual spring reaction force $T_{tb,d}(e_l)$ with respect to the lateral deviation $e_l$.

When the lateral deviation $e_l$ ranges from $-e_{l,s}$ ($e_{l,s} > 0$) to $e_{l,s}$, the target virtual spring reaction force $T_{tb,d}(e_1)$ is set to increase from $-T_{tb,d,s}$ ($T_{tb,d,s} > 0$) to $T_{tb,d,s}$ as the lateral deviation $e_l$ increases. In this example, the target virtual spring reaction force $T_{tb,d}(e_l)$ changes linearly, but may change non-linearly.

When the lateral deviation ranges from $e_{l,s}$ to $e_{l,m}$ ($e_{l,m} > e_{l,s}$), the target virtual spring reaction force $Tt_{b,d}(e_l)$ is set to increase from $T_{tb,d,s}$ to $T_{tb,d,m}$ ($T_{tb,d,m} > T_{tb,d,s}$) as the lateral deviation $e_l$ increases. The slope of the straight line is set larger than that when the lateral deviation $e_l$ ranges from $-e_{l,s}$ to $e_{l,s}$. In this example, the target virtual spring reaction force $T_{tb,d}(e_l)$ changes linearly, but may change non-linearly. In a range in which the lateral deviation $e_l$ is larger than $e_{l,m}$, the target virtual spring reaction force $T_{tb,d}(e_l)$ is set to $T_{tb,d,m}$.

When the lateral deviation $e_l$ ranges from $-e_{l,s}$ to $-e_{l,m}$ ($-e_{l,m} < -e_{l,s}$), the target virtual spring reaction force $T_{tb,d}(e_l)$ is set to decrease from $-T_{tb,d,s}$ to $-T_{tb,d,m}$ ($-T_{tb,d,m} < -T_{tb,d,s}$) as the lateral deviation $e_l$ decreases. The slope of the straight line is set larger than that when the lateral deviation $e_l$ ranges from $-e_{l,s}$ to $e_{l,s}$. In this example, the target virtual spring reaction force $T_{tb,d}(e_l)$ changes linearly, but may change non-linearly. In a range in which the lateral deviation $e_l$ is smaller than $-e_{l,m}$, the target virtual spring reaction force $T_{tb,d}(e_l)$ is set to $-T_{tb,d,m}$.

The range from $-e_{l,s}$ to $e_{l,s}$ in the graph of FIG. 11 may be set as the characteristics for the LCA control, and the other ranges may be set as the characteristics for the LKA control.

The target virtual spring reaction force $T_{tb,d}(e_l)$ set by the target virtual spring reaction force setting unit 52 is provided to the manual steering command value calculation unit 53A. The torsion bar torque $T_{tb}$, the automatic steering command value $\theta_{ad}$, and the target virtual spring reaction force $T_{tb,d}(e_l)$ are provided to the manual steering command value calculation unit 53A. In the first modification, the assist torque command value $T_{as}$ is not provided to the manual steering command value calculation unit 53A. As in the above embodiment, the assist torque command value $T_{as}$ may be provided to the manual steering command value calculation unit 53A.

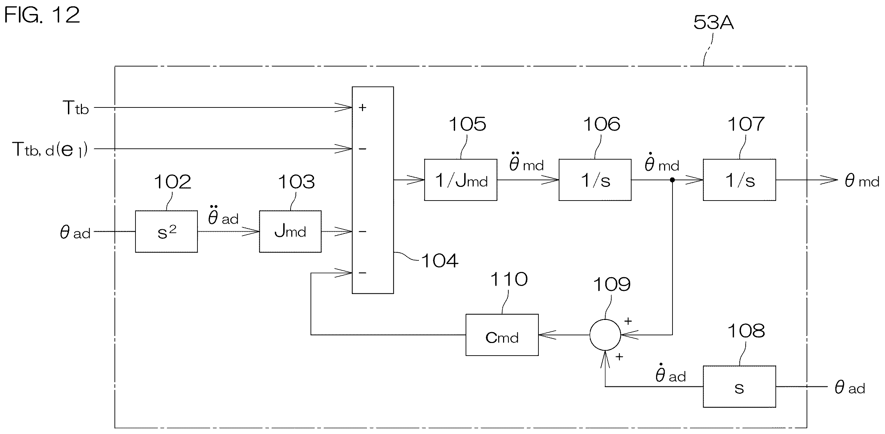

FIG. 12 is a block diagram showing the configuration of the manual steering command value calculation unit 53A. In FIG. 12, portions corresponding to those in FIG. 5 described above are represented by the same signs as those in FIG. 5.

The manual steering command value calculation unit 53A includes the second-order differentiation unit 102, the inertia multiplication unit 103, the addition/subtraction unit 104, the inertia division unit 105, the first integration unit 106, the second integration unit 107, the first-order differentiation unit 108, the addition unit 109, and the virtual damper reaction force calculation unit 110. The manual steering command value calculation unit 53A does not include the reduction ratio multiplication unit 101 and the virtual spring reaction force calculation unit 111 in FIG. 5.

The torsion bar torque $T_{tb}$, the target virtual spring reaction force $T_{tb,d}(e_l)$ set by the target virtual spring reaction force setting unit 52, the moment of inertia $J_{md} \cdot d^2\theta_{ad}/dt^2$ for the automatic steering command value $\theta_{ad}$, and the virtual damper reaction force $c_{md}(d\theta_{md}/dt + d\theta_{ad}/dt)$ provided from the virtual damper reaction force calculation unit 110 are input to the addition/subtraction unit 104.

The addition/subtraction unit 104 subtracts the target virtual spring reaction force $T_{tb,d}(e_l)$, the moment of inertia $J_{md} \cdot d^2\theta_{ad}/dt^2$ for the automatic steering command value $\theta_{ad}$, and the virtual damper reaction force $c_{md}(d\theta_{md}/dt + d\theta_{ad}/dt)$ from the torsion bar torque $T_{tb}$. Therefore, the addition/subtraction unit 104 calculates a moment of inertia $J_{md} \cdot d^2\theta_{md}/dt^2$ ($= T_{tb} - J_{md} \cdot d^2\theta_{ad}/dt^2 - c_{md}(d\theta_{md}/dt + d\theta_{ad}/dt) - T_{tb,d}(e_l)$) that corresponds to $J_{md} \cdot d^2\theta_{col}/dt^2$ on the left side of the above expression (2).

The inertia division unit 105 calculates the second derivative $d^2\theta_{md}/dt^2$ of the manual steering command value $\theta_{md}$ by dividing the moment of inertia $J_{md} \cdot d^2\theta_{md}/dt^2$ calculated by the addition/subtraction unit 104 by the column inertia $J_{md}$.

The first integration unit 106 calculates the first derivative $d\theta_{md}/dt$ of the manual steering command value $\theta_{md}$ by

integrating the second derivative $d^2\theta_{md}/dt^2$ of the manual steering command value $\theta_{md}$.

The second integration unit 107 calculates the manual steering command value $\theta_{md}$ by integrating the first derivative $d\theta_{md}/dt$ of the manual steering command value $\theta_{md}$. The manual steering command value $\theta_{md}$ is output from the manual steering command value calculation unit 53A.

The first-order differentiation unit 108 obtains the first derivative of the automatic steering command value $\theta_{ad}$.

The addition unit 109 adds the first derivative $d\theta_{ad}/dt$ of the automatic steering command value $\theta_{ad}$ calculated by the first-order differentiation unit 108 to the first derivative $d\theta_{md}/dt$ of the manual steering command value $\theta_{md}$ calculated by the first integration unit 106.

The virtual damper reaction force calculation unit 110 calculates the virtual damper reaction force $c_{md}(d\theta_{md}/dt + d\theta_{ad}/dt)$ by multiplying the addition result $(d\theta_{md}/dt + d\theta_{ad}/dt)$ from the addition unit 109 by the viscous damping coefficient $c_{md}$. The virtual damper reaction force $c_{md}(d\theta_{md}/dt + d\theta_{ad}/dt)$ is fed back to the addition/subtraction unit 104.

That is, the manual steering command value calculation unit 53A calculates the manual steering command value $\theta_{md}$ based on an equation of motion given by the following expression (14).

[Math. 14]

$$J_{md} \cdot \ddot{\theta}_{md} + J_{md} \cdot \ddot{\theta}_{ad} = T_{tb} - c_{md} \cdot \dot{\theta}_{md} - c_{md} \cdot \dot{\theta}_{ad} - T_{tb,d}(e_l) \qquad \cdots (14)$$

In the expression (14), $J_{md} \cdot d^2\theta_{md}/dt^2 + J_{md} \cdot d^2\theta_{ad}/dt^2$ is the moment of inertia. $c_{md} \cdot d\theta_{md}/dt + c_{md} \cdot d\theta_{ad}/dt$ is the virtual damper reaction force. $T_{tb,d}(e_1)$ is the target virtual spring reaction force.

That is, the manual steering command value calculation unit 53A calculates the manual steering command value $\theta_{md}$ using $(J_{md} \cdot d^2\theta_{md}/dt^2 + J_{md} \cdot d^2\theta_{ad}/dt^2)$, $(c_{md} \cdot d\theta_{md}/dt + c_{md} \cdot d\theta_{ad}/dt)$, and $T_{tb,d}(e_1)$ as the moment of inertia $J_{md} \cdot d^2\theta_{col}/dt^2$, the virtual damper reaction force $c_{md} \cdot d\theta_{col}/dt$, and the virtual spring reaction force $k_{md} \cdot \theta_{col}$ in the above expression (2), respectively, with $N \cdot T_m$ in the above expression (2) set to 0.

The first modification provides the same effects as in the above embodiment.

The first modification further provides an effect that the driver can easily recognize the distance from the center of the travel lane or the distance to the lane in the cooperative steering mode. This point will be described below.

In the above comparative method, a value obtained by multiplying the spring constant $k_{md}$ of the virtual spring by the rotational angle $\theta_{col}$ (manual steering command value $\theta_{md}$) of the lower column is used as the virtual spring reaction force. Therefore, even if a value according to the lateral position for the reference vehicle position is used as the spring constant, torque according to the lateral position for the reference vehicle position cannot be set as the virtual spring reaction force. For this reason, in a cooperative control mode in the comparative method, the virtual spring reaction force $k_{md} \cdot \theta_{col}$ (= $k_{md} \cdot \theta_{md}$) is a reaction force that depends on situations.

In the first modification, in the cooperative steering mode, the manual steering command value calculation unit 53 calculates the manual steering command value $\theta_{md}$ using the target virtual spring reaction force $T_{tb,d}(e_1)$ according to the lateral deviation $e_l$ as the virtual spring reaction force $k_{md} \cdot \theta_{md}$ in the equation of motion given by the above expression (2). Therefore, in the cooperative steering mode, the steering reaction force corresponding to the lateral deviation $e_l$ can be applied to the driver. Thus, the driver can easily recognize the distance from the center of the travel lane or the distance to the lane.

The switching of the steering mode is performed by the mode switches 31, 32. However, the higher-level ECU 201 may switch the steering mode according to an ON/OFF signal of a driving assistance function or an autonomous driving function, an obstacle(s), a driver's condition, a driver's operation on an accelerator, a brake, etc., and the travel state of the vehicle. In this case, the higher-level ECU 201 generates a mode setting signal according to the ON/OFF signal of the driving assistance function or the autonomous driving function, the obstacle(s), the driver's condition, the driver's operation on the accelerator, the brake, etc., and the travel state of the vehicle, and provides the mode setting signal to the motor control ECU 202.

For example, when the lane keeping assist control for keeping the vehicle within its lane is performed, the higher-level ECU 201 may automatically switch the steering mode as follows.

Referring to FIG. 11, when the lateral deviation $e_l$ is within the range from $-e_{l,s}$ to $e_{l,s}$, the higher-level ECU 201 sets the steering mode to the manual steering mode. Therefore, the first switch 56 is turned ON and the second switch 57 is turned OFF. In this case, the second switch 57 is turned OFF, and thus the target virtual spring reaction force $T_{tb,d}(e_1)$ in the range from $-e_{l,s}$ to $e_{l,s}$ in FIG. 11 is no longer reflected as the steering reaction force.

When the lateral deviation $e_l$ is outside the range from $-e_{l,s}$ to $e_{l,s}$, the higher-level ECU 201 sets the steering mode to the cooperative steering mode. Therefore, the second switch 57 is turned ON and the first switch 56 is turned OFF. In this case, the second switch 57 is turned ON, and thus the target virtual spring reaction force $T_{tb,d}(e_l)$ outside the range from $-e_{l,s}$ to $e_{l,s}$ in FIG. 11 is reflected as the steering reaction force.

When the steering mode is automatically switched in this way, under the condition that the lateral deviation $e_l$ is outside the range from $-e_{l,s}$ to $e_{l,s}$, the manual steering command value calculation unit 53A calculates the manual steering command value $\theta_{md}$ using the target virtual spring reaction force $T_{tb,d}(e_l)$ according to the lateral deviation $e_l$ as the virtual spring reaction force $k \cdot \theta_{md}$ in the equation of motion given by the above expression (2).

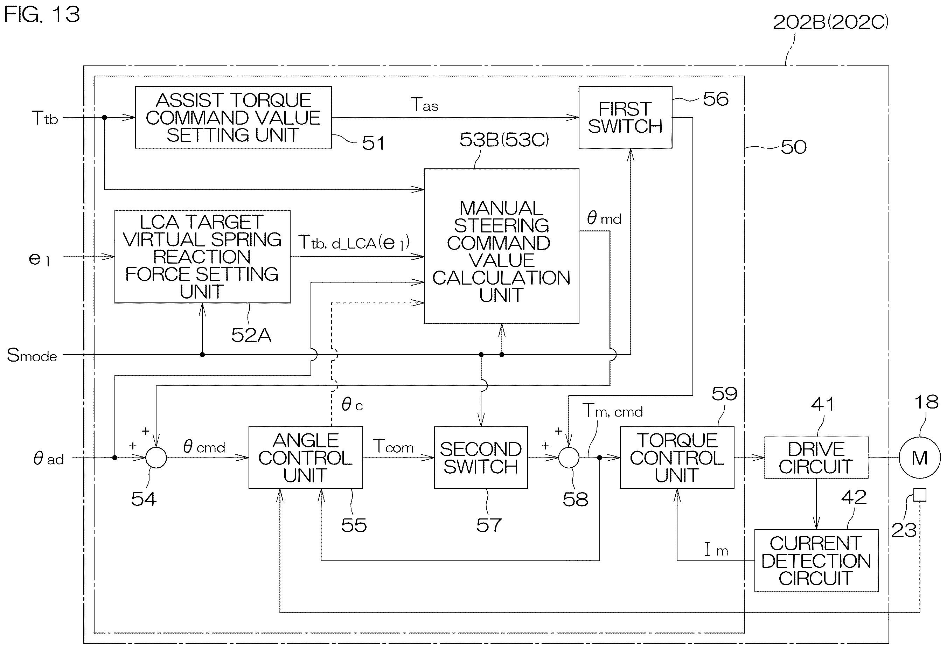

FIG. 13 is a block diagram showing a second modification of the motor control ECU. In FIG. 13, portions corresponding to those in FIG. 2 described above are represented by the same signs as those in FIG. 2.

When a motor control ECU 202B in FIG. 13 is used as the motor control ECU, the higher-level ECU 201 outputs the mode signal $S_{mode}$, the automatic steering command value $\theta_{ad}$, and the lateral deviation $e_l$ as in the case where the motor control ECU 202A in FIG. 10 is used as the motor control ECU.

The motor control ECU 202B in FIG. 13 is different from the motor control ECU 202 in FIG. 2 in terms of (1) and (2) below.

(1) The microcomputer 50 of the motor control ECU 202B additionally includes an LCA target virtual spring reaction force setting unit 52A as a functional processing unit.

(2) The configuration of a manual steering command value calculation unit 53B is different from the configuration of the manual steering command value calculation unit 53 in FIG. 2.

In the cooperative steering mode, the LCA target virtual spring reaction force setting unit 52A sets an LCA target virtual spring reaction force $T_{tb,d\_LCA}(e_l)$ for lane centering assist based on the lateral deviation $e_l$ provided from the higher-level ECU 201.

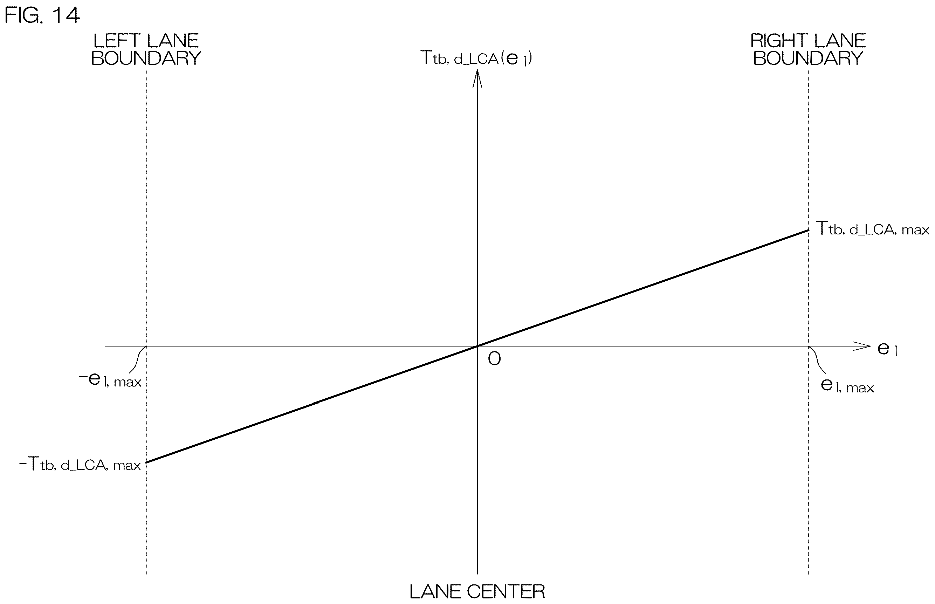

FIG. 14 is a graph showing an example of setting the LCA target virtual spring reaction force $T_{tb,d\_LCA}(e_l)$ with respect to the lateral deviation $e_l$.

The LCA target virtual spring reaction force $T_{tb,d\_LCA}(e_l)$ is set to 0 when the lateral deviation $(e_l)$ is 0. The lateral deviation $(e_l)$ when the reference vehicle position is at a right lane boundary is defined as $e_{l,max}$, and the lateral deviation $(e_l)$ when the reference vehicle position is at a left lane boundary is defined as $-e_{l,max}$. The LCA target virtual spring reaction force $T_{tb,dLCA}(e_l)$ is set to a predetermined maximum value $T_{tb,d\_LCA,max}$ when the lateral deviation $(e_l)$ is $e_{l,max}$, and is set to $-T_{tb,d\_LCA,max}$ when the lateral deviation $(e_l)$ is $-e_{l,max}$.

When the lateral deviation $(e_l)$ ranges from 0 to $e_{l,max}$, the LCA target virtual spring reaction force $T_{tb,d\_LCA}(e_l)$ is set to increase from 0 to $T_{tb,d\_LCA,max}$ as the lateral deviation $(e_l)$ increases. When the lateral deviation $e_l$ ranges from 0 to $-e_{l,max}$, the LCA target virtual spring reaction force $T_{tb,d\_LCA}(e_l)$ is set to decrease from 0 to $-T_{tb,d\_LCA,max}$ as the lateral deviation $(e_l)$ decreases. In this example, the LCA target virtual spring reaction force $T_{tb,d\_LCA}(e_l)$ changes linearly, but may change non-linearly.

The LCA target virtual spring reaction force $T_{tb,d\_LCA}(e_l)$ set by the LCA target virtual spring reaction force setting unit 52A is provided to the manual steering command value calculation unit 53B. The torsion bar torque $T_{tb}$, the automatic steering command value $\theta_{ad}$, and the LCA target virtual spring reaction force $T_{tb,d\_LCA}(e_l)$ are provided to the manual steering command value calculation unit 53B. In the second modification, the assist torque command value $T_{as}$ is not provided to the manual steering command value calculation unit 53B. As in the above embodiment, the assist torque command value $T_{as}$ may be provided to the manual steering command value calculation unit 53B.

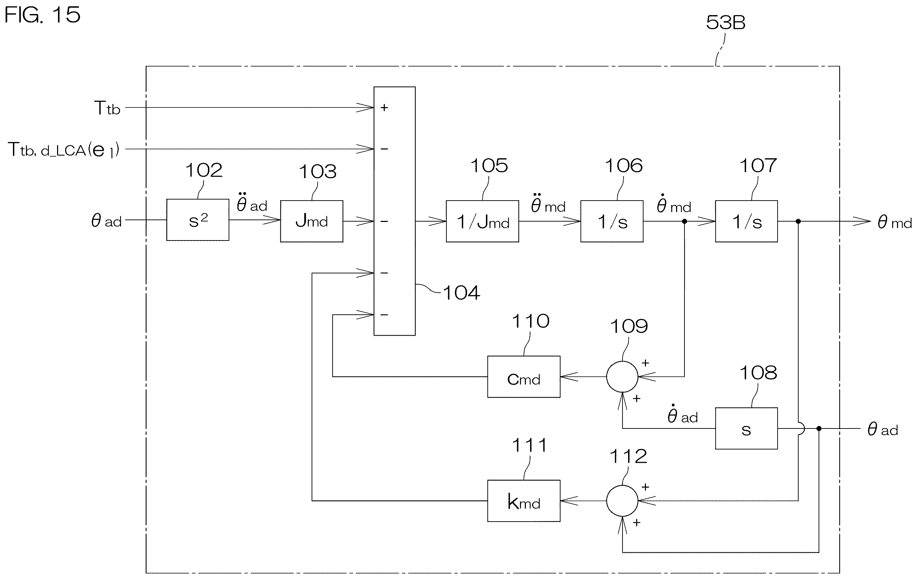

FIG. 15 is a block diagram showing the configuration of the manual steering command value calculation unit 53B. In FIG. 15, portions corresponding to those in FIG. 5 described above are represented by the same signs as those in FIG. 5.

The manual steering command value calculation unit 53B includes the second-order differentiation unit 102, the inertia multiplication unit 103, the addition/subtraction unit 104, the inertia division unit 105, the first integration unit 106, the second integration unit 107, the first-order differentiation unit 108, the first addition unit 109, the virtual damper reaction force calculation unit 110, a second addition unit 112, and the virtual spring reaction force calculation unit 111. The manual steering command value calculation unit 53B does not include the reduction ratio multiplication unit 101 in FIG. 5.

The torsion bar torque $T_{tb}$, the LCA target virtual spring reaction force $T_{tb,d\_LCA}(e_l)$ set by the LCA target virtual spring reaction force setting unit 52A, the moment of inertia $J_{md} \cdot d^2\theta_{ad}/dt^2$ for the automatic steering command value $\theta_{ad}$, the virtual damper reaction force $c_{md} \cdot (d\theta_{md}/dt + d\theta_{ad}/dt)$ provided from the virtual damper reaction force calculation unit 110, and a virtual spring reaction force $k_{md} \cdot (\theta_{md} + \theta_{ad})$ provided from the virtual spring reaction force calculation unit 111 are input to the addition/subtraction unit 104.

The addition/subtraction unit 104 subtracts the LCA target virtual spring reaction force $T_{tb,d\_LCA}(e_l)$, the moment of inertia $J_{md} \cdot d^2\theta_{ad}/dt^2$ for the automatic steering command value $\theta_{ad}$, the virtual damper reaction force $c_{md} \cdot (d\theta_{md}/dt + d\theta_{ad}/dt)$, and the virtual spring reaction force $k_{md} \cdot (\theta_{md} + \theta_{ad})$ from the torsion bar torque $T_{tb}$. Therefore, the addition/subtraction unit 104 calculates a moment of inertia $J_{md} \cdot d^2\theta_{md}/dt^2$ ($= T_{tb} - J_{md} \cdot d^2\theta_{ad}/dt^2 - c_{md} \cdot (d\theta_{md}/dt + d\theta_{ad}/dt) - k_{md} \cdot (\theta_{md} + \theta_{ad}) - T_{tb,d\_LCA}(e_l)$) that corresponds to $J_{md} \cdot d^2\theta_{col}/dt^2$ on the left side of the above expression (2).

The inertia division unit 105 calculates the second derivative $d^2\theta_{md}/dt^2$ of the manual steering command value $\theta_{md}$ by dividing the moment of inertia $J_{md} \cdot d^2\theta_{md}/dt^2$ calculated by the addition/subtraction unit 104 by the column inertia $J_{md}$.

The first integration unit 106 calculates the first derivative $d\theta_{md}/dt$ of the manual steering command value $\theta_{md}$ by integrating the second derivative $d^2\theta_{md}/dt^2$ of the manual steering command value $\theta_{md}$.

The second integration unit 107 calculates the manual steering command value $\theta_{md}$ by integrating the first derivative $d\theta_{md}/dt$ of the manual steering command value $\theta_{md}$. The manual steering command value $\theta_{md}$ is output from the manual steering command value calculation unit 53B.

The first-order differentiation unit 108 obtains the first derivative of the automatic steering command value $\theta_{ad}$.

The first addition unit 109 adds the first derivative $d\theta_{ad}/dt$ of the automatic steering command value $\theta_{ad}$ calculated by the first-order differentiation unit 108 to the first derivative $d\theta_{md}/dt$ of the manual steering command value $\theta_{md}$ calculated by the first integration unit 106.

The virtual damper reaction force calculation unit 110 calculates the virtual damper reaction force $c_{md}(d\theta_{md}/dt + d\theta_{ad}/dt)$ by multiplying the addition result $(d\theta_{md}/dt + d^2\theta_{ad}/dt^2)$ from the first addition unit 109 by the viscous damping coefficient $c_{md}$. The virtual damper reaction force $c_{md}(d\theta_{md}/dt + d\theta_{ad}/dt)$ is fed back to the addition/subtraction unit 104.

The second addition unit 112 adds the automatic steering command value $\theta_{ad}$ to the manual steering command value $\theta_{md}$ calculated by the second integration unit 107.

The virtual spring reaction force calculation unit 111 calculates the virtual spring reaction force $k_{md}(\theta_{md} + \theta_{ad})$ by multiplying the addition result $(\theta_{md} + \theta_{ad})$ from the second addition unit 112 by the spring constant $k_{md}$. The virtual spring reaction force $k_{md}(\theta_{md} + \theta_{ad})$ is fed back to the addition/subtraction unit 104.

That is, the manual steering command value calculation unit 53B calculates the manual steering command value $\theta_{md}$ based on an equation of motion given by the following expression (15).

[Math. 15]

$$J_{md} \cdot \ddot{\theta}_{md} + J_{md} \cdot \ddot{\theta}_{ad} = T_{tb} - c_{md} \cdot \dot{\theta}_{md} - c_{md} \cdot \dot{\theta}_{ad}$$
$$- k_{md} \cdot \theta_{md} - k_{md} \cdot \theta_{ad} - T_{tb,\,d\_LCA}(e_l)$$

$$\cdots (15)$$

In the expression (15), $J_{md} \cdot d^2\theta_{md}/dt^2 + J_{md} \cdot d^2\theta_{ad}/dt^2$ is the moment of inertia. $c_{md} \cdot d\theta_{md}/dt + c_{md} \cdot d^2\theta_{ad}/dt^2$ is the virtual damper reaction force. $k_{md} \cdot \theta_{md} + k_{md} \cdot \theta_{ad}$ is the virtual spring reaction force. $T_{tb,d\_LCA}(e_l)$ is the LCA target virtual spring reaction force.

That is, the manual steering command value calculation unit 53B calculates the manual steering command value $\theta_{md}$ using $(J_{md} \cdot d^2\theta_{md}/dt^2 + J_{md} \cdot d^2\theta_{ad}/dt^2)$, $(c_{md} \cdot d\theta_{md}/dt + c_{md} \cdot d\theta_{ad}/dt)$, and $(k_{md} \cdot \theta_{md} + k_{md} \cdot \theta_{ad} + T_{tb,d\_LCA}(e_l))$ as the moment of inertia $J_{md} \cdot d^2\theta_{col}/dt^2$, the virtual damper reaction force $c_{md} \cdot d\theta_{col}/dt$, and the virtual spring reaction force $k_{md} \cdot \theta_{col}$ in the above expression (2), respectively, with $N \cdot T_m$ in the above expression (2) set to 0.

The second modification provides the same effects as in the above embodiment.

In the second modification, the equation of motion (expression (15)) includes, as the virtual spring reaction force, the virtual spring reaction force $k_{md} \cdot d\theta_{ad}/dt$ for the automatic steering command value $\theta_{ad}$ in addition to the virtual spring reaction force $k_{md} \cdot d\theta_{md}/dt$ for the manual steering command value $\theta_{md}$. Thus, it is possible to reduce the automatic steering component included in the virtual spring reaction force $k_{md} \cdot d\theta_{md}/dt$ for the manual steering command value $\theta_{md}$. Accordingly, the discomfort felt by the driver can further be reduced.

The second modification further provides an effect that the driver can easily recognize the distance from the center of the travel lane or the distance to the lane in the cooperative steering mode. This point will be described below.

As described above, in the cooperative control mode in the above comparative method, the virtual spring reaction force $k \cdot \theta_{col}$ ($= k \cdot \theta_{md}$) is a reaction force that depends on situations.

In the second modification, in the cooperative steering mode, the manual steering command value calculation unit 53 calculates the manual steering command value $\theta_{md}$ using $(k_{md} \cdot \theta_{md} + k_{md} \cdot \theta_{ad} + T_{tb,d\_LCA}(e_l))$ instead of the virtual spring reaction force $k \cdot \theta_{md}$ in the equation of motion given by the above expression (2). $T_{tb,d\_LCA}(e_l)$ is the LCA target virtual spring reaction force according to the lateral deviation $e_l$. Therefore, in the cooperative steering mode, the steering reaction force corresponding to the lateral deviation $e_l$ can be applied to the driver. Thus, the driver can easily recognize the distance from the center of the travel lane or the distance to the lane.

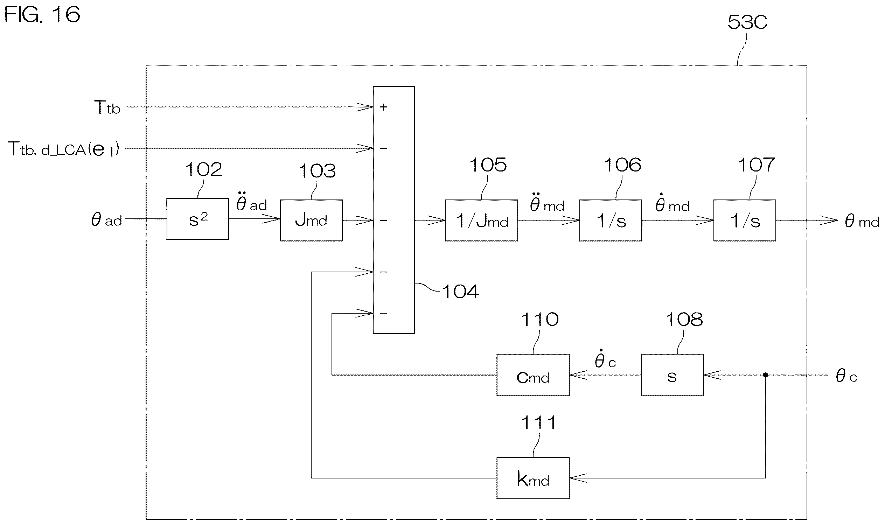

A manual steering command value calculation unit 53C shown in FIG. 16 may be used instead of the manual steering command value calculation unit 53B in FIGS. 13 and 15. In FIG. 16, portions corresponding to those in FIG. 15 described above are represented by the same signs as those in FIG. 15.

A motor control ECU in which the manual steering command value calculation unit 53C shown in FIG. 16 is used instead of the manual steering command value calculation unit 53B in FIGS. 13 and 15 will be referred to as a motor control ECU 202C (see FIG. 13) according to a third modification.

In the motor control ECU 202C according to the third modification, the actual steering angle $\theta_c$ calculated by the second reduction ratio division unit 70 (see FIG. 6) in the angle control unit 55 is input to the manual steering command value calculation unit 53C as indicated by the dashed line in FIG. 13 in addition to $T_{tb}$, $T_{tb,d\_LCA}(e_l)$, and $\theta_{ad}$.

Referring to FIG. 16, the manual steering command value calculation unit 53C includes the second-order differentiation unit 102, the inertia multiplication unit 103, the addition/subtraction unit 104, the inertia division unit 105, the first integration unit 106, the second integration unit 107, the first-order differentiation unit 108, the virtual damper reaction force calculation unit 110, and the virtual spring reaction force calculation unit 111. The manual steering command value calculation unit 53C does not include the first addition unit 109 and the second addition unit 112 in FIG. 15.

The torsion bar torque $T_{tb}$, the LCA target virtual spring reaction force $T_{tb,d\_LCA}(e_l)$ set by the LCA target virtual spring reaction force setting unit 52A, the moment of inertia $J_{md} \cdot d^2\theta_{ad}/dt^2$ for the automatic steering command value $\theta_{ad}$, a virtual damper reaction force $c_{md} \cdot d\theta_c/dt$ provided from the virtual damper reaction force calculation unit 110, and a virtual spring reaction force $k_{md} \cdot \theta_c$ provided from the virtual spring reaction force calculation unit 111 are input to the addition/subtraction unit 104.

The addition/subtraction unit 104 subtracts the LCA target virtual spring reaction force $T_{tb,dLCA}(e_l)$, the moment of inertia $J_{md} \cdot d^2\theta_{ad}/dt^2$ for the automatic steering command value $\theta_{ad}$, the virtual damper reaction force $c_{md} \cdot d\theta_c/dt$, and the virtual spring reaction force $k_{md} \cdot \theta_c$ from the torsion bar torque $T_{tb}$. Therefore, the addition/subtraction unit 104 calculates a moment of inertia $J_{md} \cdot d^2\theta_{md}/dt^2$ ($= T_{tb} - J_{md} \cdot d^2\theta_{ad}/dt^2 - c_{md} \cdot d\theta_c/dt - k_{md} \cdot \theta_c - T_{tb,d\_LCA}(e_l)$) that corresponds to $J_{md} \cdot d^2\theta_{col}/dt^2$ on the left side of the above expression (2).

The inertia division unit 105 calculates the second derivative $d^2\theta_{md}/dt^2$ of the manual steering command value $\theta_{md}$ by dividing the moment of inertia $J_{md} \cdot d^2\theta_{md}/dt^2$ calculated by the addition/subtraction unit 104 by the column inertia $J_{md}$.

The first integration unit 106 calculates the first derivative $d\theta_{md}/dt$ of the manual steering command value $\theta_{md}$ by integrating the second derivative $d^2\theta_{md}/dt^2$ of the manual steering command value $\theta_{md}$.

The second integration unit 107 calculates the manual steering command value $\theta_{md}$ by integrating the first derivative $d\theta_{md}/dt$ of the manual steering command value $\theta_{md}$. The manual steering command value $\theta_{md}$ is output from the manual steering command value calculation unit 53C.

The first-order differentiation unit 108 obtains the first derivative of the actual steering angle $\theta_c$.

The virtual damper reaction force calculation unit 110 calculates the virtual damper reaction force $c_{md} \cdot d\theta_c/dt$ by multiplying the first derivative $d\theta_c/dt$ of the actual steering angle $\theta_c$ by the viscous damping coefficient $c_{md}$. The virtual damper reaction force $c_{md} \cdot d\theta_c/dt$ is fed back to the addition/subtraction unit 104.

The virtual spring reaction force calculation unit 111 calculates the virtual spring reaction force $k_{md} \cdot \theta_c$ by multiplying the actual steering angle $\theta_c$ by the spring constant $k_{md}$. The virtual spring reaction force $k_{md} \cdot \theta_c$ is fed back to the addition/subtraction unit 104.

That is, the manual steering command value calculation unit 53C calculates the manual steering command value $\theta_{md}$ based on an equation of motion given by the following expression (16).
[Math. 16]

$$J_{md} \cdot \ddot{\theta}_{md} + J_{md} \cdot \ddot{\theta}_{ad} = T_{tb} - c_{md} \cdot \dot{\theta}_c - k_{md} \cdot \theta_c - T_{tb,d\_LCA}(e_l)$$

$$\cdots (16)$$

In the expression (16), $J_{md} \cdot d^2\theta_{md}/dt^2 + J_{md} \cdot d^2\theta_{ad}/dt^2$ is the moment of inertia. $c_{md} \cdot d\theta_c/dt$ is the virtual damper reaction force. $k_{md} \cdot \theta_c$ is the virtual spring reaction force. $T_{tb,d\_LCA}(e_l)$ is the LCA target virtual spring reaction force.

That is, the manual steering command value calculation unit 53C calculates the manual steering command value $\theta_{md}$ using ($J_{md} \cdot d^2\theta_{md}/dt^2 + J_{md} \cdot d^2\theta_{ad}/dt^2$), $c_{md} \cdot d\theta_c/dt$, and $k_{md} \cdot \theta_c + T_{tb,d\_LCA}(e_l)$ as the moment of inertia $J_{md} \cdot d^2\theta_{col}/dt^2$, the virtual damper reaction force $c_{md} \cdot d\theta_{col}/dt$, and the virtual spring reaction force $k_{md} \cdot \theta_{col}$ in the above expression (2), respectively, with $N \cdot T_m$ in the above expression (2) set to 0.

In the third modification, ($J_{md} \cdot d^2\theta_{md}/dt^2 + J_{md} \cdot d^2\theta_{ad}/dt^2$) is used instead of the moment of inertia $J_{md} \cdot d^2\theta_{col}/dt^2$ in the above expression (2). Therefore, the automatic steering component $J_{md} \cdot d^2\theta_{ad}/dt^2$ included in the moment of inertia $J_{md} \cdot d^2\theta_{md}/dt^2$ according to the manual steering command value $\theta_{md}$ can be reduced.

In the third modification, the virtual damper reaction force $c_{md} \cdot d\theta_c/dt$ according to the first derivative $d\theta_c/dt$ of the actual steering angle $\theta_c$ is used instead of the virtual damper reaction force $c_{md} \cdot d\theta_{col}/dt$. Therefore, the virtual damper reaction force does not include the automatic steering component. Further, the virtual spring reaction force $k_{md} \cdot \theta_c$ according to the actual steering angle $\theta_c$ is used instead of the virtual spring reaction force $k_{md} \cdot \theta_{col}$. Therefore, the virtual spring reaction force does not include the automatic steering component. Accordingly, in the third modification, the discomfort felt by the driver can be reduced in the cooperative steering mode.

Although the embodiment and modifications of the present disclosure are described above, the present disclosure may also be implemented in other forms.

In the above embodiment, the spring constant $k_{md}$ in the above expressions (3), (15), (16) is obtained through experiments, analyses, etc. in advance. However, the spring constant $k_{md}$ in the above expressions (3), (15), (16) may be calculated based on the following expression (17) using the estimated disturbance torque value $^{\wedge}T_{1c}$ calculated by the disturbance torque estimation unit 64 (see FIG. 6) and the actual steering angle $\theta_c$ calculated by the second reduction ratio division unit 70.
[Math. 17]

$$k_{md} = \frac{\hat{T}_{lc}}{\theta_c} \quad \cdots (17)$$

In the above embodiment, the viscous damping coefficient $c_{md}$ in the above expressions (3), (14), (15), (16) is obtained through experiments, analyses, etc. in advance.

However, the viscous damping coefficient $c_{md}$ in the above expressions (3), (14), (15), (16) may be calculated based on the following expression (18) using the estimated disturbance torque value $^\wedge T_{1c}$ calculated by the disturbance torque estimation unit 64 and the actual steering angle $\theta_c$ calculated by the second reduction ratio division unit 70.
[Math. 18]

$$c_{md} = \frac{\hat{T}_{lc}}{\dot{\theta}_c} \quad \cdots (18)$$

In the above embodiment, the angle control unit 55 (see FIG. 6) includes the feedforward control unit 63. However, the feedforward control unit 63 may be omitted. In this case, the feedback control torque $T_{fb}$ calculated by the feedback control unit 62 is basic target torque.

The above embodiment illustrates the example in which the present disclosure is applied to motor control for a column type EPS. However, the present disclosure is also applicable to motor control for an EPS other than the column type. The present disclosure is also applicable to control on an electric motor for steered angle control of a steer-by-wire system.

Although the embodiment of the present disclosure is described in detail above, this is merely a specific example used to clarify the technical content of the present disclosure. The present disclosure should not be construed as being limited to the specific example, and the scope of the present disclosure is limited only by the appended claims.

Description of the Reference Numerals

1 ... electric power steering system, 3 ... steered wheel, 4 ... steering operation mechanism, 18 ... electric motor, 51 ... assist torque command value setting unit, 52 ... target virtual spring reaction force setting unit, 52A ... LCA target virtual spring reaction force setting unit, 53, 53A, 53B, 53C ... manual steering command value calculation unit, 54 ... integrated angle command value calculation unit, 55 ... angle control unit, 56 ... first switch, 57 ... second switch, 58 ... addition unit, 59 ... torque control unit, 201 ... higher-level ECU, 202, 202A, 202B, 202C ... motor control ECU

**Claims**

1. A motor control device that controls drive of an electric motor of a steering device, the motor control device comprising:

   a manual steering command value calculation unit that calculates a manual steering command value using torsion bar torque;
   an integrated angle command value calculation unit that calculates an integrated angle command value by adding the manual steering command value to an automatic steering command value for driving assistance; and
   a control unit that controls the drive of the electric motor based on the integrated angle command value, wherein
   the manual steering command value calculation unit is configured to, in a driving assistance mode, calculate the manual steering command value using an equation of motion of a reference model of the steering device, and
   the manual steering command value calculation unit calculates the manual steering command value using, as a virtual damper reaction force in the equation of motion, a virtual damper reaction force obtained by adding a virtual damper reaction force according to a derivative of the automatic steering command value to a virtual damper reaction force according to a derivative of the manual steering command value.

2. The motor control device according to claim 1, wherein when calculating the manual steering command value, the manual steering command value calculation unit uses a target virtual spring reaction force according to a lateral position for a reference vehicle position relative to a travel lane as a virtual spring reaction force in the equation of motion.

3. The motor control device according to claim 1, wherein the manual steering command value calculation unit calculates the manual steering command value using, as a virtual spring reaction force in the equation of motion, a virtual spring reaction force obtained by adding a virtual spring reaction force according to the automatic steering command value to a virtual spring reaction force according to the manual steering command value.

4. The motor control device according to any one of claims 1 to 3, wherein the manual steering command value calculation unit calculates the manual steering command value using, as a moment of inertia in the equation of motion, a moment of inertia obtained by adding a moment of inertia according to the automatic steering command value to a moment of inertia according to the manual steering command value.

FIG. 1

EP 4 734 353 A1

FIG. 2

FIG. 3

ASSIST TORQUE
COMMAND VALUE(Tas)

〈LEFT〉

O

〈RIGHT〉
TORSION BAR
TORQUE (Ttb)

FIG. 4

Ttb

N・Tm

Lower column

Jmd , θcol

Cmd

kmd

FIG. 5

FIG. 6

EP 4 734 353 A1

FIG. 7

FIG. 8

FIG. 9

EP 4 734 353 A1

FIG. 10

EP 4 734 353 A1

FIG. 11

EP 4 734 353 A1

FIG. 12

EP 4 734 353 A1

FIG. 13

202B(202C)

FIG. 14

LEFT LANE
BOUNDARY

$T_{tb, d\_LCA}(e_l)$

RIGHT LANE
BOUNDARY

$T_{tb, d\_LCA, max}$

$-e_{l, max}$

$e_{l, max}$

$e_l$

O

$-T_{tb, d\_LCA, max}$

LANE CENTER

EP 4 734 353 A1

FIG. 15

FIG. 16

# EP 4 734 353 A1

## INTERNATIONAL SEARCH REPORT

| International application No. |
|---|
| **PCT/JP2023/023082** |

**A. CLASSIFICATION OF SUBJECT MATTER**

*H02P 6/08*(2016.01)i
FI: H02P6/08

According to International Patent Classification (IPC) or to both national classification and IPC

**B. FIELDS SEARCHED**

Minimum documentation searched (classification system followed by classification symbols)

H02P6/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/079765 A1 (JTEKT CORP.) 11 May 2023 (2023-05-11)<br>entire text, all drawings | 1–4 |
| A | WO 2023/286169 A1 (JTEKT CORP.) 19 January 2023 (2023-01-19)<br>entire text, all drawings | 1–4 |
| A | WO 2016/162902 A1 (NISSAN MOTOR CO., LTD.) 13 October 2016 (2016-10-13)<br>entire text, all drawings | 1-4 |

☐ Further documents are listed in the continuation of Box C.  ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **10 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/023082**

| Patent document cited in search report | Publication date (day/month/year) | Patent family member(s) | Publication date (day/month/year) |
|---|---|---|---|
| WO 2023/079765 A1 | 11 May 2023 | (Family: none) | |
| WO 2023/286169 A1 | 19 January 2023 | (Family: none) | |
| WO 2016/162902 A1 | 13 October 2016 | US 2018/0086341 A1 entire text, all drawings EP 3281845 A1 | |

Form PCT/ISA/210 (patent family annex) (January 2015)

**REFERENCES CITED IN THE DESCRIPTION**

**Patent documents cited in the description**

- WO 2023286169 A